# EUROPEAN PATENT APPLICATION

(11) **EP 1 970 564 A1**
(43) Date of publication of application: **17.09.2008**
(21) Application number: 06843581.7
(22) Date of filing: 28.12.2006
(51) Int. Cl.: F03G 7/10, F01K 7/00, F02C 1/00, F03B 13/00, F03B 17/04

(54) **THREE-DIMENSIONAL UNIVERSAL GRAVITATION OF MINIMUM COMPOSITE PARTICLES FILLING UNIVERSE, METHOD FOR USING TOTAL PRESSURE Pgh OF UNIVERSAL GRAVITATION AND ITS DEVICE**

(30) Priority: 06.01.2006 JP 2006001320
(71) Applicant: Yasuda, Toshitaka, Suita-shi, Osaka 5650814 (JP)
(72) Inventor: Yasuda, Toshitaka, Suita-shi, Osaka 5650814 (JP)
(74) Representative: Haley, Stephen
(86) International application number: PCT/JP2006/326203
(87) International publication number: WO 2007/077916

(57) **Abstract**

The subject of this invention is offer the 2nd class permanent motion which is based on the smallest complex particle filled up universe, universal fundamental energy source and universal gravitation pressure.

This inventor found out the means which analyze invisible parts of universe, and found out universal element, for example, SCP, UFES, NFF, FTRP, SQF, BFE, CAC, MFH, 3DUG, UGP and some fundamental laws, and found out all universe are the 2nd class permanent motion, and found out the methods which generate and use the 2nd class permanent motion of the artificial phenomena. Figure 2

## Description

This invention does not belong to the existing 1 st science in which there is no SCP that is filled up the universe. This invention belongs to the new 2nd science in which there is SCP that is filled up the universe, and is related to the methods and machines which use 3DUG and UGP of SCP which is filled up the universe, and use the artificial 2nd class permanent motion and the artificial 2nd class permanent motion machines.

In order to compare, this column explains not only the 1st science techniques but also the 2nd science techniques.

This invention is related to the 2nd class permanent motion which dose not be realized by the existing 1 st science and techniques. This specification explains the following facts that the techniques of this invention do not exist in the domain of the existing 1 st science and techniques, and that the hypothesis of the structure, composition, function of SCP and the hypothesis of structure, distribution, propagation, function of the 1st and 2nd universal fundamental energy source are unable to be directly observed. Therefore, this invention doesn't have any physical evidence, and so is unable to be explained to the others until this invention completed. In order to understand this specification, scientist must read repeatedly this specification in which all necessary matters have been written.

In order to realize this application, this inventor has been suffered from many matters other than the studies. At the time when my study started after the preparation term from 1937 to 1990, this inventor tried to get the cooperation of government, university and enterprise, but this invention was disregarded from all. And this inventor inquired of the Patent office about the 2nd class permanent motion. The answer from the Patent office is 'By the law, patent is given a new technique which uses the natural law of the existing 1st science. The 2nd class permanent motion violates the natural laws, therefore, the Patent office has no duty which inspects the application of the 2nd class permanent motion. The Patent office of every country has the international agreement which disregard and dose not inspect the application of the 2nd class permanent motion.' In the all domain of the existing 1 st science which is the science of unbalance energy, there is no the 2nd class permanent motion. But, the all natural phenomena of the universe are balance energy and the 2nd class permanent motion, and the new 2nd science is the science of balance energy. Therefore, this invention is the new technique which uses the natural law of the new 2nd class permanent motion.

As the above mention, many sufferings continued in the study of this invention, and a weekly magazine dated the 2nd of October in 1995 reported an article titled 'Permanent motion machine is Permanent delusion.' This article was based on the existing 1 st science, and called and mocked at the people who are studying the permanent motion machines as 'Made scientists'. Intimate friends who read this magazine said to this inventor 'This magazine reports that the permanent motion is not exist. Stop your studying, because your study is nonsense.' At that time, this inventor could not explain this invention by physical evidence, but had confidence that this study will succeed. Therefore, this inventor continues this study. If this study had been stopped at that time, the loss to human society would have been amounted to enormous sum which is unable to be calculated, and in the situation in which every one dose not become aware, the human society would lose the 2nd class permanent motion and the 2nd class permanent motion machine.

The 2nd science and this invention will be able to establish riches, peace, happiness of human being and earth, but simultaneously will give trouble to scientists of the 1 st science, oil product countries, oil field developing countries and developer of the other clean energy. This inventor can not keep off the mental shock, but have made every effort to reduce substantial trouble. For example, this inventor have written consciously this specification whose readers will be able to reset themselves to the 2nd science and will be able to make the great work earlier than the others in the new and wide field of the 2nd science. About oil product countries, as the mention in the column of the effects of invention, this inventor has considered to remove the trouble of oil product countries. This inventor hope that media and news paper don't report any matters which are not yet confirmed, but report any matters which are useful for human society, for example, media should report the reformation of 2nd generation of organization of human society which is mentioned in the column of effects of invention of this specification.

l divert myself in random talk. It is the most terrible matter that any mistaken report of media, before it's mistake is found out, generate a great loss which is related to the existence of human society.

TV ought to expel the poor joke and the poor program, because, since I have read that magazine, it appears to me that the mistake and the poor joke of media practice human society unhappiness.

That magazine is wrong, the 2nd science and this invention are reasonable, and the 1 st science is unreasonable, but strangely, in the existing human society it is not the 2nd science, but it is the 1st science, that the human society admits as truth. In this case, it is necessary that the words reasonable and unreasonable must be explained in detail. In the 2nd science, the natural laws do not have physical evidence, but it is confirmed that the laws are able to explain the all material, energy and phenomena of the universe, and able to realize new theory and new technique. But in the 1 st science, the natural laws have physical evidences, but the natural laws are unable to explain the all material, energy and phenomena of the universe, and are unable to realize new theory and new technique.

From the viewpoint same as the above mentioned unreasonableness, in the existing international society, there are a few countries which make every effort to keep the peace of the world irrespective of physical evidence. But these countries are worrying about objection of the countries which are adhering to physical evidence. These facts are same as the facts that this inventor which have been making an effort to establish riches, peace and happiness of human being and earth is worrying about objection of the people which are adhering to physical evidence. Therefore, Japan ( this inventor ) shall enter into triple alliance with U.S.A. and G.B. which have been making effort to establish the peace of the world in the face of danger, and shall use the 2nd science and this invention and shall establish riches, peace and happiness of human being and earth.

In order that this invention will be registered with Patent Office, and will establish riches, peace and happiness of human being and earth, it is necessary that this specification points out the many mistakes of the 1st science, and excludes the mistake that the 2nd class permanent motion is contrary to the natural laws, and excludes the adherence to the physical evidence.

In the following, the strong point, mistake and countermeasure of the 1st science are explained.
Strong point, mistake and countermeasure:
Strong point:
   A) The 1 st science is based on the consideration of Newton. By the interpretation of the 1 st science, Newton considered that the essence of natural phenomena is too difficult for human being to understand, therefore, it is useless that someone make efforts to understand the essence of natural phenomena, in the condition that the essence of natural phenomena dose not been understood, a mathematical analysis of observation result of a phenomena has the function as a natural law of that phenomena. This consideration realized the science, and has improved the science rapidly, and has built up the 1 st science which has developed human society. The mathematical analysis of observation result is the strong point of the 1 st science.

B) Mistake:
   But this strong point has the limit which is useful in the unbalance energy mechanism but becomes useless in the balance energy mechanism. In this case, unbalance energy mechanism is the mechanism of artificial phenomena, and the balance energy mechanism is the mechanism of natural phenomena. Namely, the 1 st science is useful in the artificial phenomena but becomes useless in the natural phenomena, in the concrete, in the 1 st science, Hydraulics and Hydrodynamics, Elementary particle physics, Universe physics have been studying the balance energy phenomena of the nature as the unbalance energy phenomena. Therefore, Hydraulics and Hydrodynamics, Elementary particle physics and Universe physics of the 1st science are impossible to study the essence of the natural phenomena. The field in which the study is possible is only mathematical analysis of the observation result.

But the 1st reason of the above mentioned mistake is the mathematical analysis, in other words, the mathematics can analysis the unbalance energy phenomena which acts with the change of energy, but can not analysis the balance energy phenomena which acts with the constant energy.

The 2nd reason of this mistake is the adherence to the physical evidence. The adherence to the physical evidence removes the invisible parts of the universe from the 1st science. In the universe, there are the invisible parts very much more than the visible parts. And in the invisible parts of the universe there are the most important parts of the universe, for example, there are the smallest complex particle, about 36 kinds of the universe construction elements and the universal fundamental energy sources. The 1 st science dose not include the smallest complex particle, about 36 kinds of the universe construction elements and the universal fundamental energy source, therefore, the 1st science is unable to explain the universe.

C) Countermeasure:
   In order to analyze truthfully the universe, it is necessary that the 2nd science has the following 2 countermeasures. The 1 st countermeasure is that the mathematical analysis dose not use in the 2nd science. In the 2nd science, instead of the mathematical analysis, every scientist use □the smallest complex particle, □about 36kinds of the universe construction elements and □the universal fundamental energy source. In the 1st science, □, □ and □ are unable to be found out, but in the 2nd science □, □ and □ are able to be found out. And □,□ and □ are the fundamental elements of the 2nd science. In the 2nd science, every scientist is able to analysis all natural phenomena and all artificial phenomena by □, □ and □. In other words, □, ② and □ is able to create the laws which control the whole universe contained the invisible parts.

The 1 st science is based on the mathematical analysis, therefore, the 1 st science is the science which is able to analyze only the visible parts of the universe. And so, the 1st science omits the abovementioned □, ② and □, and is unable to analyze the invisible parts of the universe.

In the visible parts of the universe, the 1 st science is the excellent science, but in the invisible parts of the universe, the 1 st science is useless, because there is no evidence which is analyzed by mathematics. In international society, in order to create the rich, peaceful and happy society by the 2nd science, it is necessary that the society create the new international rules which are the copies of the natural laws of the 2nd science.

In order that the human society begins to use the 2nd science, it is necessary that the human society changes the rules, for example, those which recommend the struggle for existence. If there is the struggle for existence, the 2nd science creates the acceleration of the struggle, but is unable to create the rich, peaceful and happy society.

The international society will be leaded to the unknown and new situation. In this situation, the international society must create the new rules which are able to make and keep the rich, peaceful and happy international society.

The international society must change the cosmic philosophy, philosophy of value, philosophy of life, and must remove the many obstacles to make and keep the rich, peace and happiness.

This inventor will enter into alliance with the U.S.A and G.B., and will change the international rules, and create the rich, peaceful and happy society.

The 1 st science which is based on the mathematical analysis asserts that the all phenomena of the universe change to one direction, therefore, the human society understands that the human society changes to one direction. On the contrary, the 2nd science which dose not use mathematics asserts that the all phenomena of the universe keeps 3 dimensions balance and dose not change, therefore, this inventor believe that the human society must cooperate and make and keep the balance.

In the 2nd science, the every matter, energy and phenomenon of the universe has the perfect independence without any relation to the other. The every matter, energy and phenomenon receives necessary all energy from UFES. Therefore, all matters, energy and phenomena are impartial. This impartiality is based on the responsibility of each matter, energy and phenomenon. In the international society, each country, religion, race and area must make efforts to satisfy the necessary condition with reference to the abovementioned.

The international society must make efforts to create the necessary rules, and confirm the results of use of the rules, and amend the rules.

In the 2nd science, the confirmation of the rightness of the natural law is both the confirmation that the natural law is able to explain all matters, energy and phenomena of the universe, and the confirmation that the natural law is able to make the new theory and new technique in wide range. In the case that there is the rule which is unable to explain or make, the rule must be amended.

The rule of the international society must be created, used and amended correspondingly the case of the natural law.

The 1 st science which is based on the Western Civilization which is rational and subjective is suitable for the start from 0. The 2nd science which is based on the Japan Civilization which is tenacity and objective is suitable for the change from the 1 st science to the 2nd science.

The Japan Civilization is suitable not only for the creation of the 2nd science but also for the making of the rich, peace and happy human society.

In order to make the rich, peace and happy human society, it is necessary that as the proverb Rise over the old / Create the news', human society must remove the all problems which are described in the effects of this invention column.

In order that a person whose self-expression is weak accomplish his purpose, it is necessary that he exerted himself for his plan to the end. Therefore, a person whose self-expression is weak, usually, dose not dislike the difficulties and make efforts to the end.

In the universe, the every constitution element of the universe dose not act individually, and there is no concentration to one pole, and there is no struggle between two poles. The 1st and 2nd fundamental energy sources which keep 3dimensions balance coexist-fusion with the energy which has a proper dimension to the matter, energy and phenomenon. The human society must change 'Theory of competition' to 'Principle of natural law' and must follow the natural laws and must remove price competition, various kinds of trouble, terrorism and invasion.

From my experience, it is relatively easy that I found out the imperfection of the 1 st science and it's countermeasure. This cause which I believe is as follows. The cause of the imperfection of the 1st science is the failure of study method and not the shortage of the study mental ability. The mathematical analysis of observation results is suitable to study of the artificial phenomena which are unbalance energy phenomena and are able to be measured, but is unsuitable to study of the natural phenomena which are balance energy phenomena and are unable to be measured. Because the unmeasured parts are more than the measured parts in the universe, therefore, the 1 st science can not study the natural phenomena in the universe.

In the case that the scientist dose not steel out of the failure of study method, this scientist is unable to study natural phenomena.

In the human society too, in the case that the human society dose not steel out of the principle of competition, the human society is unable to be rich, peaceful and happy. The human society must steel out of the principle of competition and must adopt the principle of natural law.

The failure of recognition:
The recognition of the 1 st science is that the 1 st science admits only the existence of the matter which is able to be measured.

The failure of recognition and the countermeasure:
Fundamental failure:
   This recognition changes the real universe to the transformed universe which is formed of the visible parts.

In the case that humankind try to understand the essence of universe, it is impossible that humankind try to understand the universe by the measurement of the universe. In order to understand the essence of the universe, it is necessary that the method which is able to study the invisible parts of the universe is found out.

Japan culture is suitable to create the 2nd science, because Japan culture dose not be satisfied with mathematical analysis, and require the essence of universe.

Japan culture which is able to negotiates with the counter negotiator from the viewpoint of the counter negotiator has no experience which decide international matter by Japan own policy. But, hereafter, I believe that Japan culture has the responsibility which assert Japan opinion and make rich, peaceful and happy international society.

The 1st science which started from Newton's laws in the 17th century and has been based on the mathematical analysis of observation results has been changed by the progress of observation technique, from the 17th century to the 19th century, all of the dynamic matters had been calculated by Newton's laws.

In the beginning of the 20th century, Einstein proposed the principle of relativity. This principle of relativity is based on the mathematical analysis of the work of the working phenomena, therefore, the relativity can remove the calculation error which occurs by the 2nd science law 'The relativity between the action speed of force and the speed of mass'. Still more important, Einstein's 'Strain of space' is mistake by Einstein's 2 misunderstandings, the correct interpretation is 'Strain of the field' of the 2nd science.

About Einstein's principle of relativity, the all except the expression of the general principle of relativity are mistaken, and this expression has been changed from relativity to absoluteness by Einstein's 2 misunderstandings.

Einstein's principle of relativity is able to calculate accurately a part of 1 dimension universal gravitation and a part of the function of universal gravitation to the propagation of light. But principle of relativity dose not have any utility except the abovementioned. This fact is the suggestion of abovementioned [0043] .

Einstein's principle of relativity does not exist except the expression of the general principle of relativity in the universe.

The abovementioned facts suggest the necessity that the 2nd science finds and uses the method which finds out, imagines, understands, constructs and uses the unmeasured parts of the universe.

Countermeasure:
The 2nd science finds and uses the abovementioned method as following.

Japan culture suits to the 2nd science. Japan culture has the many viewpoints to the natural phenomena, and Japanese thinks about the nature in one body with nature.

The abovementioned Japan culture is unsuited to the 1st science which is based on the mathematical analysis of the observation results. Namely, Japan culture is unsuited to the science which is based on the observation, but suits to the science which analyzes the invisible parts of the universe.

The 2nd science has been created by Japanese and Japan culture which suits to analysis of the invisible parts of the universe.

Therefore, in the case that a foreigner who wants to know the 2nd science studies Japanese and Japan culture, the combination of the foreign culture and Japan culture, and the combination of the foreign language and Japanese language have a big possibility which gets great harvest.

For example, let us think the difference between how to use English and Japanese.

In English, in the case of answer to the negative question, a standard of how to use Yes or No is not the question, (does not think a standpoint of questioner), but the facts of the recognition of solver. Therefore, in the study by English, in the case that the study is the analysis of natural phenomena, the scientist is thinking subjectively not by the standpoint of natural phenomena.

Therefore, English and Western culture suit to the 1 st science which is studying subjectively the natural phenomena by the recognition of the observations.

On the contrary, in Japanese, in the case of answer to the negative question, a standard of how to use Yes or No is the question, (think the standpoint of questioner), not the facts of the recognition of solver. Therefore, in the study by Japanese, in the case that the study is the analysis of natural phenomena, the scientist is thinking objectively by the standpoint of natural phenomena.

Therefore, Japanese and Japan culture suit to the 2nd science which is studying objectively the natural phenomena by the facts of the natural phenomena from the standpoint of the nature.

Japanese language is able to analyze finely and exactly the complicated matter, and to know how to use the languages which expresses the delicate distinction.

Japan should be proud of the function of Japanese language and Japan culture which is able to understand the complicated matter correctly, objectively and exactly, and to think correctly, and to express correctly, and to communicate correctly, and to manage correctly.

In the case that people are proud of Japan language, they must study how to use Japan language. There is no thing which is completed without arrangement, comparison, study, training, preparation and effort.

In order to write the excellent Japanese language, it is necessary that the writer has not only the literary ability, but also the knowledge, study and experience about the contents.

This inventor keeps the abovementioned matters in the head, and writes this specification.

The famous archaic writing that we have now, long ago, had got the reputation, transmitted from generation to generation, had been modified and has become the excellent archives. I hope that this specification will get the reputation, transmit from generation to generation, will be modified and will become the famous document.

In the natural science, it is important that the scientist can study without miscellaneous works, the scientist can concentrate on the essential point in the wide background, high level works of the science win popularity, the number of scientist are increasing and many works of science transmit from generation to generation.

The creation of the method that the scientist discovers the natural laws of the invisible parts of the universe and the scientist confirms that these natural laws are able to explain simply, necessarily and uniformly the all things of the universe, and to have the artificial utility in wide range in the universe is the 2nd science.

In the 2nd science, the condition which exchanges a hypothesis for a natural law is the confirmation that the hypothesis is able to explain simply, necessarily and uniformly the all things of the universe, and to have the artificial utility in wide range in the universe.

SCP, UFES, NFF, FTRP, SQF, BFE, CAC, MFH, 3 DUG and UGP which are mentioned in Claim 1 are examples.

The fault of recognition by transfer of coordinate in Einstein's principle of relativity, and countermeasure:
By the 2nd science, truth is that the figure of the universe is the settled globular universe, and the universe fuses SCP to atom in the center part of universe by the mathematical collapse, and BIGBANG occurs at the center of universe by the mathematical collapse too. Therefore, the 2nd science can settle the center of universe and is the principle of absoluteness. On the contrary, the faults of the 1 st Science are that the figure of the universe is not globular by the mathematical collapse. Therefore, the 1 st science can not settle the center of universe and is the principle of relativity. In the 2nd science, SCP and UFES are filled up the whole universe, therefore, the centers of coordinates exist and act at the every points of the universe, the coordinates are able to change the direction of axes, but can not transfer the center. In the 1 st science, there are no SCP and UFES, but the 1st science calculates observation results by the hypothesis that `strain of time-space' acts as the universal gravitation. In this case, 'strain of time-space' is fault, and the correct solution is 'strain of field of gravitation', and more, in the 1 st science, the energy of transfer of coordinate, change of position and change of boundary condition occur the errors of calculations.

As the abovementioned, the center of universal coordinate exists and acts at the every point in the universe, therefore, the center of coordinate of all matter, energy and phenomena of the universe exist independently and keep 3dimensions balance at the every point in the universe. And so the calculation of science must use the observation results at the every point in the universe. But the 1st science which is based on the mathematical analysis is the science of experimental formula which is correct only in the range of experiment without theory. In this condition, the 1st science has developed the human society. In the case of the 1st science, especially, in the calculation of the hydrodynamics, the elementary particle physics and cosmic physics, these observation results which are used are the values at the observed points and not the values at the generation points. Therefore, the hydrodynamics misunderstands the balance flow energy of the natural fluid flow as the unbalance energy, and the theory and the true nature are far apart. The elementary particle physics can not explain all matter, energy and phenomena in the universe, and the theory of this physics can not be used in the other science. The elementary particle physics which can not be used in the other science is nonsense. The cosmic physics has calculated the observation values of the observation points, and can not calculate the invisible parts in the universe.

The 1 st science, in the case of calculation of universe, dose not use the observation results at the generation point whose observation is impossible, and use the observation results at the point whose observation is possible. And the 1 st science dose not remove the difference between the generation point value and the observation point value.

About Einstein's principle of relativity, the abovementioned facts and 2 substitutions for Einstein's misunderstanding which are described as follows are the cause that the 1 st science accepts Einstein's principle of relativity which dose not exist in the universe.

Einstein's principle of relativity hypothesizes that the space is vacuum, and energy,
Force and time which are expended to transfer Einstein's coordinate, the inclination of observation results by the transfer, and the inclination of observation results by the change of boundary condition are denied by Einstein's energy mechanism which is formed by vacuum.

The evidence of Einstein's energy mechanism is that the principle of relativity is calculated by Einstein's energy mechanism. By this method, in the case that the space is filled with SCP the same calculation comes into existence.

As a result of these facts, Einstein's principle of relativity is the experimental formula. And Einstein's principle of relativity is fault except this experimental formula.

Namely, Einstein's principle of relativity is a experimental formula.

But, Einstein's experimental formula which is modified by 2 substitutions is the calculation of the data in process of phenomena, therefore, Einstein's experimental formula escapes the calculated error by the law 'Relativity between function speed of force and moving speed of mass.' Therefore, the calculation accuracy of Einstein's experimental formula is better than Newton's law.

Countermeasure:
In the 2nd science, in the cases that the coordinate is transferring, observation methods differ and boundary conditions differ, the inclinations of observation results are modified.

However, in order to modify the observation errors, it is necessary that the scientist understands and uses the 2nd science, and knows SCP, UFES, NFF, FTRP, SQF, BFE, CAC, MFH, 3DUG and UGP, and understands the essences of universe, and understand and uses the essences of light and electro-magnetic wave. Namely, the scientist of the 1st science is unable to modify the observation errors, and is unable to understand the necessity of modification of observation errors, and is unable to understand that the 1 st science is fault.

Imperfection of Epistemology, and countermeasure:
Imperfection of Epistemology:
   In the 1st science, because the direct observation is the evidence of existence of matter, the space in which there is no visible matter is hypothesized vacuum. And the 1st science observes the universe and elementary particle by this hypothesis. In this case, the theory and the true are far apart, but the 1st science can not understand the far apart condition.

Countermeasure:
The 2nd science, irrelevant to visible or invisible, as the description in the column of the subject solution means, dose not use mathematics, uses sensibility, contemplation, understanding, constitution of Japan culture, makes hypothesis of construction, composition and function of the element of universe, collects the observation results of all phenomena around the above element, tries to explain the above element and all observation results by the above hypothesis, amends the above hypothesis, confirms the amended hypothesis is able to explain the above element and all natural phenomena, and confirms the amended hypothesis can make new theory and new technique in wide range, and calls the amended hypothesis as new natural law. In this method, works increase to mammoth quantity which is treated hardly, nearly impossible. The reason that this works have been completed is that the universe is formed simply, necessarily and uniformly.

In the 2nd science, the confirmation of a natural law of phenomena is the combination of an actual proof that the natural law can explain the phenomena and the all of the universe, and an actual proof that the natural law can make the new theory and the new technique. This confirmation can make a natural law which is more objective and more reasonable than a natural law which is based on the observation results.

In the 2nd science, all natural phenomena and all artificial phenomena are constituted by the common element SCP and common natural law 'Perfect division of works, perfect conference of works and no struggle system.' Therefore, all natural phenomena and all artificial phenomena are able to be explained simply, necessarily and uniformly, through the common nature, similar nature and different nature, by the common element SCP and common natural law 'Perfect division of works, perfect conference of works and no struggle system.

For example, natural phenomena, wind, typhoon, tornado, river, light, electromagnetic wave, electric current, and the artificial phenomena of this invention are able to be explained simply, necessarily and uniformly, through the common nature, similar nature and different nature.

Concretely, the 2nd science has explained simply, necessarily and uniformly the balance flow energy system of laser radiation element, the balance flow energy system of super conduction, the balance flow energy system of this invention by the hypothesis of the balance flow energy of the structure, composition and function of SCP, the field of 3 dimensions universal gravitation, the field of gravitation pressure, the field of gravitation of earth and the force of peculiar dimension.

But the 1st science which can calculate only the unbalance energy can not understand the balance flow energy of the natural phenomena, wind, typhoon, tornado, river, light, electromagnetic wave, electric current, the balance flow energy of laser radiation element, the balance flow energy of super conduction and the balance flow energy of this invention.

Einstein's principle of relativity had the possibility which approach to the 2nd science by the above 2 substitutions, but Einstein and the researchers of principle of relativity could not explain the essence of principle of relativity, and the researchers of the quantum mechanics have opposed Einstein. And the above 2 substitutions are unable to be understand by other than from the 2nd science. Therefore, Einstein's principle of relativity stays as the experimental formula.

Contact point between the explanation and reader:
This inventor tried several times to explain the 2nd science to others during writing this specification. But I could not get understand of others. I think the reason is that there is no contact point about recognition, thought and purpose between readers and the specification in which all things are new and unknown. Therefore, this inventor is trying to write the contact points in the beginning of this specification.

Difference between Western culture and Japan culture and the 2nd science:
The difference is as follows.

Western culture and the 1 st science:
Strong point:
   The strong points of Western culture and the 1 st science are the mathematical analysis of observation results. The essence of universe is too difficult to understanding of human kind, and the essence of universe dose not be understood by human kind. The mathematical analysis is formed the experimental formula, this experimental formula is able to use in the range of the experiment, in spite of that the essence of universe dose not be understood by human kind. This mathematical analysis has developed the Western culture and the 1 st science. The Western culture and the 1 st science have conquered all over the world.

b) Weak point:
   Western culture and the 1 st science have developed only the mathematical analysis which is showed in Newton's law F = axM, and have disregarded the energy source of inertia law and action-reaction law. In other words, the range of 1 st science is only about 50 percent of the range of Newton's law. Western culture and the 1st science have been arranged in long time with sufferings and development. Therefore, in appearance, there is no weak point in Western culture and the 1 st science. The condition in which weak point dose not be found out becomes the weak point. In the case that there is a self consciousness which has strong point and weak point, thinking, judging and action are flexible and watchful, and there is the continuation of custom which makes effort to amend and arrange the thinking, judging and action, and so, the good results are maintained. In the case that there is a self consciousness which has no weak point, thinking, judging and action become stiff and careless, and there is no custom which makes effort to amend and arrange the thinking, judging and action, and so, the good results vanish. Western culture believes that Western culture has no weak point and is superior to other cultures, therefore, in the case in which Western culture contacts other cultures, it appears, there is no custom that try to reexamine, amend and arrange the program. Western culture believes that Western culture only one is perfect in many other cultures, and has the qualification of the leader of human society and has made the world history. Every one who believes that himself is perfect, and excels than others, and dose not reexamine, amend and arrange his thinking, judging and action can not get good result. The 1 st science which has developed the present human society, believes that the 1st science is truthful, and can not find out that the 1 st science is about 50 percent of Newton's laws, and can not reexamine and change the general concept 'Human kind need not search the essence of universe which is very difficult to understand by human kind. In the case in which the essence of universe dose not be understood by human kind, the mathematical analysis of observation results becomes the natural law. Human kind is able to use the natural phenomena by the natural law.'

In that result, Western culture and the 1st science have been defeated in the creation of the 2nd science which researches the invisible parts of the universe. And, in this time, in spite of that Western culture wishes to make the peace and happiness of the world and struggles with difficulties, Western culture is disliked by many parties concerned. The latest several precedents are almost same. It is necessary that Western culture change, with reference to the natural fundamental law 'Perfect division of work, perfect conference of work, no struggle system', the strategy which create rich, peaceful and happy human society.

The strong point which has completed its role, will transfigure to weak point, because the strong point have been used superabundantly and got the better effect, therefore, it becomes superabundant and becomes weak point.

Reason which can not escape from weak point and countermeasure:
Reason:
   The reasons are the followings that thinking, judging and action are too subjective, and self insistency is too strong, the past success is connected with over glad and too mach confidence and the misunderstanding 'The mathematical analysis of observation results is the best' has not been studied that it is right or not, how long dose it be effective, amendment and arrangement are necessary or not.

countermeasure:
In anything and in everything, it is necessary that every one is modest, subjectively thinks, judges and acts, accepts other's opinion, gives elasticity to thinking, judging and action, considers the state of affairs, and continues amendment and arrangement.

Namely, Western culture and the 1st science must accept 'The 2nd generation organization reform of human society' which is shown in the column of effect of this invention and reset the 1 st science to the 2nd science.

( b ) Japan culture and the 2nd science:
   a Weak point:
      In the case in which Japan culture studies the natural science, Japan culture which is under the influence of Buddhism, unconsciously, has the tendency which tries by SATORI 'spiritual awake' of Buddhism to understand the essence of the universe which is understood very hard.

Japan culture, unconsciously, respects sensitivity, namely, 'mind-transference, reads spaces between lines, hears one awakes ten, and, understands ten conversations simultaneously'. In the case in which Japan culture studies the natural science, because Japan culture has the above 2 tendency, Japan culture wishes to open SATORI, to put sensitivity to practical use and is absorbed in the study which tries to understand the essence of universe, as a results, is obstructed by the difficulty of the essence of universe which is unexpected, and is repulsed at the entrance of science, and can not start up the new systematic science.

Therefore, Japan culture behaves a stolen ride on Western culture and the 1 st science, and develops by the following of Western culture. And Japanese thinks that Japan culture dose not suit to the natural science.

b Secret strong point:
   In the stages of the creation and development of the 1 st science which is based on the mathematical analysis of observation results of the visible parts of universe, Japan culture has only the abovementioned weak points. But in the stages of the creation and development of the 2nd science which is based on the invisible parts of universe, the abovementioned weak points change for the strong points.

Namely, in the case which studies the essence of universe which contains the invisible parts of universe, a 'tendency which adheres to understand the essence of universe' and a tendency which respects sensitivity, namely, 'mind- transference, reads spaces between lines, hears one awakes ten, and, understands ten conversations simultaneously' become higher level by motivation, self-consciousness of mission and training, and show great power.

The strong point which the weak point changes for, becomes higher level, makes this inventor create the 2nd science, realizes this invention, makes the 2nd generation new system which changes human society and makes this inventor write this specification.

And so, because Japan culture respects objectivism, accepts others opinions, likes harmony and dislikes to put others to trouble, in order to clear of trouble, this inventor has established the method which resets the 1 st science to the 2nd science, makes effort to arrange the easy method which uses the 2nd science, and repeats the verification of proper or not of the method and of amendment and arrangement of the method.

BFE of the 2nd class permanent motion, CAC and FTRP:
In order to prove that all things are right, all things, SCP, UFES, FTRP, SQF, BFE, CAC et cetera in this specification have been confirmed, namely, these all things are able to explain all matters, energy and phenomena of universe, and these all things are able to make new theories and new techniques in wide range. And in order to understand these all things of universe and the 2nd class permanent motion, it is necessary to understand that the fluid flow of universe is formed by BFE, CAC and the combination of the formal wave energy 'formal SQF' and the following overlap wave energy 'following overlap SQF' by CAC and FTRP, and these 2 SQF make the inertia and the action-reaction and the 2nd class permanent motion:
   Generation, maintenance and energy mechanism of fluid flow:
      The natural flow quantity generation function which generates and maintains the natural 2nd class permanent motion of the natural fluid flow, for example, wind, typhoon, tornado, river, and the artificial flow quantity generation function which generates and maintains the artificial 2nd class permanent motion in the artificial fluid flow of this invention are together formed by FTRP which recovers fluid flow track space by universal gravitation of earth. In the case of the usual artificial phenomena, there are many different boundary conditions between the natural phenomena, but in the artificial phenomena of this invention, it is necessary that there is no different boundary condition between the natural phenomena, because the invention fluid flow is the balance flow energy but the usual artificial fluid flow is unbalance flow energy. If there is only one different condition in an invention, a machine of this invention can not operate, because the fluid flow energy can not change for balance flow energy and stays in unbalance energy condition. In order that the 2nd class permanent motion of fluid flow exists and operates, it is necessary that UFES exist and operate independently at the every point of fluid flow, and UFES generates SQF in proportion to the size of acceleration of matters, energy and phenomena. SQF is the strain quantity of UFES. SQF operates as the acceleration of matters, energy and phenomena, for example, inertia, action-reaction function, and after operation, SQF returns to 0, and in UFES there is no change. Kinds of SQF are the formal SQF and the following overlap SQF. The formal SQF makes the formal acceleration of matters, energy and phenomena, the following overlap SQF makes inertia and action- reaction function. The formal SQF and the following overlap SQF make the formal phenomena and the overlap phenomena, and in the case in which necessary conditions are satisfied, make the 2nd class permanent motion. In the 2nd class permanent motion, it is necessary that these necessary conditions are 100 percent satisfied, in the case of 99 percent, the 2nd class permanent motion does not been established, because the energy system stays in the unbalance energy system. In order to make the 2nd class permanent motion machine, it is necessary to understand that every experiment is useless, the scientist must understand the all things of the 2nd science before experiment, the scientist must establish the theory and design of the 2nd class permanent motion machine before beginning of experiment, effect of experiment is only the confirmation of establishment of the 2nd class permanent motion machine. In this case, the fundamental theories, for example, SCP, UFES, NFF, FTRP, SQF, BFE, CAC, MFH, 3DUG and UGP are able to be found out from experiment unconditionally by the scientist who understands the above all matters. After all, in the 2nd science, it is must that the theory goes ahead of the experiment. These facts are the cause which the 1st science can not understands the 2nd science, and the cause that there is not the 2nd science in the extension of the 1st science. The energy of fluid flow is generated by the function of the generating catalyst, propagation medium and function medium of the fluid flow which is generated by FTRP. The energy sources of fluid flow are the coexist-fusion of the 1 st fundamental energy source, the 2nd fundamental energy source and the 3rd fundamental energy source by FTRP. In this case, all fundamental energy sources have been finished to propagate into the whole universe and exist and act individually at the every points of universe, therefore, all fundamental energy sources are able to work without propagation time and propagation distance. The energy of fluid flow = ( fluid static pressure + fluid dynamic pressure ) ×flow volume xspecific gravity. This is the work quantity of pressure of fluid flow. And this energy dose not belonged to fluid flow, and is belonged to the field of fundamental energy source. The fluid is energy generation catalyst, energy propagation medium and energy function medium, and fluid energy independently generates, maintains and acts at every points of universe, and fluid is flowed by FTRP, and fluid is flowed without resistance, and natural fluid flow and artificial fluid flow of this invention are the 2nd class permanent motion, and the fluid energies which are passing each sectional area of the 2nd class permanent motion fluid flow in a unit time are equal. Namely, natural and invention fluid flow are BFE. The 1st fundamental energy source is UFES, the 2nd fundamental energy source is a pressure part of UFES, and the 3rd fundamental energy is the universal gravitation of earth.

The artificial flow quantity generation function of air or water in the usual artificial fluid machine is the pressure difference which makes air or water propagate and act in one direction. In this case, because there is a resistance to flowing of air or water therefore, the fluid energies which are passing through sectional area of fluid flow in a unit time are different, namely, the unbalance flow energies. In the artificial fluid flow, the fluid flow which is generated by FQGM which has the abovementioned balance flow curved surface, and whose energies are equal at the every sectional area are able to receive SQF from 1 st, 2nd and 3rd fundamental energy source.

(b) CAC of BFE of the 2nd class permanent motion:
   By the 2nd science, the natural wind, typhoon, tornado, river, light, electric current, electromagnetic wave are the balance flow energy of the natural 2nd class permanent motion. And artificial fluid phenomena in the circular machine of this invention are BFE of the 2nd class permanent motion whose energy sources are the 1 st, 2nd and 3rd fundamental energy sources. The special features of BFE of the 2nd class permanent motion are formed by CAC, and both coordinates are the accelerative coordinates, one is the rotational coordinate, and all are BFE.

(c) Recognition of coordinate:
   In the 2nd science, the existing recognition about the change and transfer of coordinate is unconditionally good for mathematics. But, in the science, it is necessary that the coordinates are satisfied with the boundary conditions which receive the energy from the 1 st, 2nd and 3rd fundamental energy sources. Therefore, it is necessary that these coordinates are the acceleration coordinate, and the energies of these coordinate are BFE.

Einstein who did not know the clause ( c ) made the principle of relativity. Therefore, the special principle of relativity whose coordinate is moving with uniform velocity is unable to receive energy from the 1 st, 2nd and 3rd fundamental energy sources, therefore, the special principle of relativity does not exist in the universe. In the general principle of relativity, the theoretical expression is made by the boundary conditions which are satisfied with the acceleration motion by the universal gravitation, therefore, the theoretical expression which is modified by 2 substitutions is right and exist in the universe. One of the 2 substitutions is that velocity of light changes for velocity of SQF, and other of the 2 substitutions is that the principle of relativity changes for 'relativity between function speed of power and speed of mass'. In the general principle of relativity, proposition, hypothesis, consideration and thinking experiment except the theoretical expression do not exist in the universe.

Natural BFE of the 2nd class permanent motion which are wind, typhoon, tornado, river, electric current and electro- magnetic wave, and artificial BFE of the 2nd class permanent motion which is air or water flow in circulate type of this invention are made from CAC, and one coordinate of CAC is a rotating coordinate. This reason is that the rotating coordinate fixes the fluid flow in circle direction perpendicular to axis, and the other coordinate fixes the fluid flow in axis direction whose phase differs 90 degrees from circle direction, and the fluid flow is fixed in the universe, and BFE are formed by axis direction component and circle direction component.

The wave phenomena, for example, light, electric current, electro-magnetic wave and fluid flow are the wave energy which is formed by particle component of SCP and wave component of UFES. These fundamental phenomena are confirmed by experiments.

The abovementioned are the relation between CAC and BFE of fluid flow in the fluid machine of this invention.

BFE and CAC of natural fluid flows which are the 2nd class permanent motion:
The energy system of BFE of the 2nd class permanent motion of the natural fluid flows, in the concrete, is as the described in the column 'Means to solve the problems'. But, viewed from abstract angle, is as follows.

(a) Energy source of the 2nd class permanent motion of the natural fluid flows:
   In the universe, the 1st and 2nd fundamental energy sources which are the energy sources of the natural 2nd class permanent motion exist and act independently at the every points of universe, and are able to supply, without propagate time and propagate distance, all necessary energies which generate all things at the every points to the all things which generate at the every point of universe. These all things are able to do so by the constitution, component and function of SCP which forms the fundamental sources.

And, in order to be satisfied with the law 'balance flow conditions' in which before action, during action and after action, namely always, the fields of the 1 st and 2nd fundamental energy sources which exist and act at the every points in the working domain of a natural phenomena exist and keep the balance to the field of the 1 st and 2nd fundamental energy sources which exist and act at the every points in the universe, and generate SQF to the direction of fluid flow, supply this SQF to the fluid flow as energy.

In this case, the reasons which the fields keep 3 dimensions balance are that, in the 3 dimensions space of universe, in order to keep the things at the fixed point, it is necessary to keep the 3dimensions balance. And the point keep function at every points are the 3 dimensions balance of the field of 3 dimensions universal gravitation, and 3 dimensions balance of the field of the universal gravitation pressure. The point fixed function of the field of UFES strains in proportion to the change speed of the momentum of mass at every point, this momentum = massxvelocity is supplied to the fluid flow without propagation time and propagation distance. But this function exists only in the case in which the mass is moving with acceleration or combination of acceleration.

If it is possible that the scientist will find out mathematics which expresses the abovementioned and calculates the observation results of the abovementioned, the mathematics will be able to analyzes all of universe.

The natural 2nd class permanent motion and coordinate:
All natural phenomena in the universe are the natural 2nd class permanent motion, or one part of the natural 2nd class permanent motion. All natural phenomena generate and act only by the 1 st, 2nd and 3rd fundamental energy sources which exist in the domain of the natural phenomena. All natural phenomena independently exist and work, and all natural phenomena are combined and form the universe.

In the case in which the natural 2nd class permanent motion is formed by coordinates, one of these coordinates is an accelerate coordinate, and other coordinate is rotation coordinate. These coordinates are CAC.

And, the coordinates of the heavenly bodies are the straight accelerate coordinate in which the heavenly bodies formed by BIGBANG are flying from the center of universe to the circumference of universe, and the rotation coordinate in which the revolution and rotation of milky, revolution and rotation of the solar system, revolution and rotation of fixed star, planet and satellite and orbit of comet. These are CAC.

CAC of wave energy, for example, light, electric current and electro-magnetic wave are the straight accelerate coordinate by the arrangement of SCP, and the rotation accelerate coordinate by the rotation of CAC.

BFE and CAC of the fluid flow of the 2nd class permanent motion of this invention:
In the following, the energy system is explained.

(a) Fundamental energy source of the artificial fluid flow of this invention:
   In the case of the circular type of this invention, the field of the 1st, 2nd and 3rd fundamental energy sources exist and act at the every points in the circular type, and the field has the ability to supply all necessary energy to all every points in the circular type, and in order to satisfied with boundary condition to supply energy, UFES keeps the 3 dimensions balance in the circular type. In this case, it is necessary that UFES keeps the 3 dimensions balance, in order that UFES is able to work as fundamental energy source in the 3 dimensions universe. The 3 dimensions balance of the field of UFES strains in proportion to the momentum of mass at the every point, and SQF is supplied from UFES at the every points as the necessary energy of the momentum of mass. In the fluid flow, in order to keep the abovementioned phenomena, it is necessary that the fundamental flow of fluid is acceleration flow.

Therefore, as the following (b), the boundary conditions of the circular type of this invention must has the same boundary conditions of the natural fluid flow.

If there is the special mathematics which is able to express and analyze the 2nd science, this mathematics is able to express and analyze this invention. This mathematics is supposed to be CAC of wave energy of BFE.

And in this invention, in the inside and in the outside of the circular type of this invention, there are the universal gravitation of earth which is the 3rd fundamental energy source and the field of atmospheric pressure and the atmospheric pressure which is formed by the field of atmospheric pressure.

The 3rd fundamental energy source and the field of atmospheric pressure are able to penetrate side wall and blade and to keep the 3 dimensions balance, but the atmospheric pressure is unable to penetrate side wall and blade.

Therefore, in order to use the atmospheric pressure in the circular type, it is necessary that the atmospheric pressure is able to keep the 3 dimensions balance and to circulate without the resistance of the blade in the circular type. These are the 4th step of the boundary conditions of circular type of this invention.

And, the abovementioned boundary conditions to use the atmospheric pressure in the circular type, after understanding, are simple and unconditional, because the all natural laws of the 2nd science are simple and unconditional. But the all natural laws of the 2nd science are the inexperience laws, because the 2nd science is the theories of the invisible parts of universe. The confirmation of the rightness of the all natural laws of the 2nd science are the combination of a confirmation that the natural laws are able to explain all things of universe, and a confirmation that the natural laws are able to make new theories and new techniques in wide range. The fundamental functions of the fundamental energy sources are found out in the simple experiment by the scientist who has understood the 2nd science. Therefore, the confirmation of that the 2nd class permanent motion of the 2nd science is right is constituted, after the scientist has understood the 2nd science, and has understood the 100 percent of the boundary conditions of the 2nd class permanent motion. After all, in order to create the 2nd class permanent motion by the 2nd science, it is necessary that the scientist has understood the 2nd science. The scientist who dose not yet understand the 2nd science can do nothing. The 1st understanding of the 2nd science is very difficult, because the all inexperience laws are found out by only the sensitivity, the abovementioned confirmation method of rightness of natural laws requires the huge working quantity, and there is no one who understands my work. I thought that I have the duty and responsibility of the creation of the 2nd science and the 2nd class permanent motion, because no one believes the 2nd science and the 2nd class permanent motion, and have continued and have completed.

In the natural field, the atmospheric pressure exists at the every points of fluid flow and keeps unconditionally 3 dimensions balance. But in the circular type, as following, the atmospheric pressure act to only the fluid supply entrance of the fluid holding and supplying means. The abovementioned boundary conditions to use the atmospheric pressure are the method which overcomes the abovementioned difference.

In the circular type, the necessary boundary conditions which make UFES act:
The necessary boundary conditions are that the 1 st, 2nd and 3rd fundamental energy sources and the atmospheric pressure, before action, exist and keep the 3 dimensions balance at the every points in the circular type, during action, are keeping the 3 dimensions balance and strain themselves to the direction of fluid flow and to the direction of FTRP, and make SQF in proportion to the momentum of the mass of the fluid flow, and these SQF are supplied to fluid flow as the energy of the momentum of mass of fluid flow at the every points in the circular type without propagate time and propagate distance, after acting, at the every point, accelerate motion exists to the direction of fluid flow, this accelerations combine plus and minus acceleration motion and return to the original state, and the 1 st, 2nd and 3rd fundamental energy sources and the atmospheric pressure do not change. The abovementioned conditions are the condition of the 2nd class permanent motion. This phenomena is called the natural law 'Independence of 2nd class permanent motion.' And these conditions are, as the following, the 4th step of circular type of this invention.

The 2nd class permanent motion and CAC:
In the conditions which are satisfied with the constitution and boundary conditions of the 4th step in the following, the artificial phenomena in the circular type of this invention are the 2nd class permanent motion of BFE which are formed by the 1 st, 2nd and 3rd fundamental energy sources and the atmospheric pressure, and exist and act independently at the every points in the circular type.

This artificial BFE of the 2nd class permanent motion is expressed by CAC.

The artificial BFE of fluid flow of the 2nd class permanent motion are constituted of the rotation coordinate which rotates fluid in circle trace and the acceleration coordinate which accelerates or decelerates fluid in the axis direction.

Einstein used 2 difficult mathematics in the general principle of relativity. But, the 2nd science need not use difficult mathematics. Einstein misunderstood the energy system of universe, and insisted on his 'Strain of time-space'. But, there is not 'Strain of time-space' in the universe. In the universe, there is 'Strain of fundamental energy source'. 2 misapprehensions of Einstein are amended, 'Strain of time-space' changes to 'Strain of fundamental energy source'.

In the circular type of this invention, it is necessary that the propeller generates the artificial 'Strain of fundamental energy source' as same as the natural 'Strain of fundamental energy source' which is formed by the universal gravitation. The figure of the blade of this propeller is the balance flow curved surface which is formed by circle, ellipse, hyperbola, parabola and trigonometric function.

The circle rotation coordinate is formed by the rotation of motor. The circle rotation is acceleration motion and completes in every one rotation, therefore, the all energies of circle direction of fluid flow are supplied from the 1 st, 2ne and 3rd fundamental energy sources and become the 2nd class permanent motion. Therefore, the load of motor is only the energy of axis direction of fluid flow.

This invention is formed by the inexperience laws of invisible parts of the universe, therefore, this inventor could not explain this invention to others, because the evidence of the 2nd class permanent motion dose not exist in the incomplete experiments. The 2nd class permanent motion will appear in the experiment in which all necessary boundary conditions will be satisfied. This inventor have been continuing by oneself.

But, after the study of inexperience natural laws will be completed, this inventor will spread the study domain to physical, engineering, medical, pharmacy, economics, law, literature and religion, and will request cooperation by Osaka university ( it is my old school, I will make the study center of the 2nd science in it ) , other university, professional school, licensed enterprise, research organization and development project of government, and will make the 2nd science develop and make human society become to be rich, peaceful and happy.

The necessary conditions of human society which is the one part of the universe:
In the 2nd science, in the universe, both vital phenomena and non vital phenomena are formed of SCP which is only one construction element of universe and are formed by the inexperience natural laws, for example, 'Providence of coexist-fusion' , 'Independence of the 2nd class permanent motion' and 'Perfect division of work system, perfect conference of work system, and struggle 0 system', and are formed fairly, equally and uniformly.

The abovementioned facts show the following, the CREATOR is thinking that the human society is one part of the natural phenomena. Therefore, the human society must obey the all natural laws. This inventor call these things as 'Natural law principle', 'Natural law principle' is that human society forces all ideologies, all way of thinking, all principle and all action to obey the abovementioned natural laws.

In order that the human society becomes to be rich, peaceful and happy, it is necessary that all countries, all races, all religions and all cultures must fuse themselves to the abovementioned natural laws.

The 2nd generation innovate planes of human society which are described in (1)-(14) of the column 'Effect of invention' obey the abovementioned 'Natural law principle'. The details of recognition, way of thinking and purpose are described in column 'Effect of invention', and the points are as the following.
Preparation:
As the preparation of innovation, 3 steps of innovations, namely, the changes of knowledge of energy, universe and elementary particle, the changes of recognition of value, human life and morality, and the changes of the fundamental ideologies of the international society go ahead of innovation.

Concretely, from the abovementioned study center of the 2nd science, the effects of this invention and the 2nd science will be announced to the world, these information will push the innovation.

Namely, 'Principle of competition' which makes not only the useful competition but also the useless and harmful competition generate must be change for 'Natural law principle' which rightfully uses this invention and the 2nd science, and makes human society become to be rich, peaceful and happy. This inventor will not license the opponent which obstructs 'Natural law principle'.

The action which makes human society become to be rich, peaceful and happy:
With the popularization of 'Natural law principle', on 'The 2nd generation innovate planes of human society' , the human society will have to make all countries, races, religions, cultures, areas and leaders use this invention, the 2nd science, the 2nd class permanent motion and 'The 2nd generation innovation' , and fairly and equally constitute by the own resources in the self-domain 'The self-support self-develop own spiral ' which is self-developing by the efforts in self-domain and the co-operation with other domains. And all countries, races, religions, cultures, areas and leaders will become to have 'The self-support self-develop own spiral' , as the results, the human society will become to be rich, peaceful and happy, and trouble, poorness, hunger and terrorism will become extinct.

Because the abovementioned (A), (B) are in the inexperience domain, (A) and (B) will have to establish by the inexperience laws, namely, the proverb 'Tide over unhappy past, Create happy new way' will work in the great part of (A) and (B). And U.S.A. and G.B. have made efforts to establish the peace of the world by the inexperience laws without evidence, therefore, this inventor will enter into alliance with U.S.A. and G.B. ,in order to establish (A) and (B).

In order to accomplish the difficult purposes which change the international society to be rich, peaceful and happy, it is necessary that the human society must use the right and fitting inexperience rules. Therefore, the right or not of the inexperience rules must be inspected, amended and arranged. This inventor will inspect, amend and arrange the inexperience rules, and will confirm that the inexperience rules are right and fitting.

After the human society will establish the cooperation, finish the necessary efforts and treatments and finish the inspection, amendment and arrangement of right or not of the inexperience rules, human society will not have the necessary of competition, and will become to be rich, peaceful and happy, the inexperience rules will be amended, arranged and will become the right and fitting experience rules.

2 ) The weak point of mathematics and countermeasure:
   1. The fundamental weak point of mathematics and countermeasure :
      The fundamental weak point of mathematics:
         Because mathematics treats the change of quantity, in the science, the mathematics is able to analyze the artificial phenomena which have the change of the unbalance energy system, but is unable to analyze the natural phenomena without change of BFE. And the 1 st science inclines to mathematics and has hypothesized that the energy which forms the universe is the unbalance energy, and the universe is changing to one direction. And the 1 st science uses this hypothesis, and analyzes the observation results of universe as the unbalance energy, and discusses the universe as the unbalance energy. Therefore, the mathematics of the 1 st science is able to calculate with high accuracy the artificial phenomena which are formed of the unbalance energy, but is unable to calculate the natural phenomena which are formed of the balance flow energy. But, the 1st science which places too much confidence on mathematics, does not find out the weak point of mathematics, and does not find out that the 1 st science has been stagnated for long time.

Countermeasure:
Countermeasure at present:
   The 2nd science can not finish the study of mathematics which is able to analyze the natural phenomena which are formed of BFE. At present time, this inventor is finding out and is studying CAC of wave energy of BFE of fluid flow. Namely, this inventor has made many hypothesis, for example, the hypothesis of the structure, composition and function of SCP which is the fundamental particle of the universe, the hypothesis of the structure, distribution, propagation and function of the 1 st, 2nd and 3rd fundamental energy source, the hypothesis of structure, distribution, propagation and function of the general forces, the hypothesis of the all fundamental elements which construct the universe. And this inventor has been continuing inspection, amendment and arrangement of all hypothesis. If, this inventor could explain the all things of the universe by the abovementioned hypothesis, and this inventor make the new theories and the new techniques by the abovementioned hypothesis, it is confirmed that the all hypothesis are right. And this inventor can explain the structure, composition, distribution, propagation and action of all things of the universe by the hypothesis. And this inventor is making efforts to express these hypothesis by mathematics, but, the results are the approximate express and not the theoretical express.

The 1 st science dose not know the essence of natural phenomena and uses the natural phenomena by the approximate express, the 2nd science understands the essence of natural phenomena and uses the natural phenomena by the approximate express.

This inventor admires Newton's good judgment that in order to use the natural phenomena, it is not necessary to understand the essence of universe, it is the approximate express to use the essence.

Countermeasure in future :
After (a), in the process of application of the 2nd science, we will have to express the abovementioned hypothesis and the observation results by mathematics, and will have to confirm exist or not of mathematics which is able to express the all things of universe.

The weak points of the application method of mathematics:
• Weak point of mathematic analysis of observation results:
   Mathematics of the 1 st science analyzes the observation results which dose not be amended its inclination of observation results by the difference of boundary conditions. In the 1st science, there is not the theories that the observation results incline by the difference between boundary conditions of the location of phenomena and of observation. In Hydrodynamics, Elementary particle physics and Universal physics, these differences are large, therefore, in these regions of the 1 st science the theories and the truth are far apart. Still more, in the case of mathematic analysis, the invisible parts of universe, for example, SCP, UFES, NFF, FTRP, SF, BFE, CAC, MFH and 3DUG fall off from the observation results.

Namely, in all phenomena, the mathematic analysis can not analyze the phenomena truthfully.

The reason that the 1 st science can not find out the 1 st and 2nd fundamental energy source is that the study of the 1 st science begins from the observation and uses mathematic analysis and dose not use the analysis by brains.

Until now, no one finds out that the progress and development of the 1 st science has been obstructed by mathematic analysis. The 1 st science has been valuing mathematic analysis as the most excellent study method. In the human history, there are many precedents that the self-confidence for strong point promotes 'too much trust', 'go too far', 'pass over the fault' and 'fall ruin'. As the mention in the column 'Effect of invention', the 1 st science is as same as the abovementioned precedents, and Globalization which is based on 'Competition principle' is one example and must be reexamined, amended and arranged as soon as possible. In the every things, there are changes of boundary conditions, there is a term in which the role is finished, it is necessary that some one notice the changes and the end of term, and respond as soon as possible.

Countermeasure:
The 2nd science dose not use mathematics analysis of observation results, in exchange for these , beforehand, the 2nd science has constituted the hypothesis of construction, composition and function of SCP, the hypothesis of constitution, distribution, propagation and function of the 1 st, 2nd and 3rd fundamental energy source, the hypothesis of new energy, universe, elementary particle, the hypothesis of constitution, distribution, propagation and function of general forces, the hypothesis of the fundamental elements, for example, providence of coexist-fusion, uses these hypothesis, and carries out the prediction of the condition before act, the condition during act and the condition after act of the phenomena which is the subject of study, still more, amends and arranges the inclination of observation results by the transfer of coordinate, the difference of observation methods, the difference of locations, and finds out the essence of the phenomena, and as the mentioned in clause 7) expresses this essence by mathematics. The works which constitutes these hypothesis are cruel difficulty for human being, but in this time, the almost hypothesis have been constituted, after this time any one is able to use these hypothesis and the 2nd science.

Weak point that the natural law which is expressed by mathematics is the approximate expression, and mathematics can not express the essence of phenomena:
• Weak point that the mathematics can not express the essence of phenomena:
   The mathematics of the 1 st science make the constitute elements of mathematics correspond to constitute elements of the phenomena which are visible, and expresses phenomena in the abstract, and simplifies the expression. Therefore, the natural laws which are showed by mathematics are the approximate expressions in which the all parts of true phenomena are exchanged to the visible parts of the visible phenomena, and all invisible parts are falling off. In the result, in the case in which use only the visible parts of phenomena, mathematics is no trouble, but mathematics can not analyze the essence of universe and obstructs the progress and development to the invisible parts of universe.

The approximate expression is the expression which is formed by the observation results, and the approximate expression can be used only in the observation range.

Therefore, the natural law which is expressed by only mathematic expression, in spite of actual results, can not express the essence of the phenomena.

Countermeasure:
Countermeasure is as same as the mention in clause156, in the following 7) and in the column 'Solute means for the object', and on further examination, confirms that these hypotheses are able to explain commonly the objective phenomena and the all things of universe and these hypotheses make the new theory and the new technique.

Weak point of space coordinate and countermeasure:
Weak point of apace coordinate:
   • In the case Newton's law:
      Newton's law hypothesizes the space of universe which is filled with the unknown static Ether and is 3dimensions space + time space. But there is not explanation of the static Ether.

In the 2nd science, individual SCP which is the Ether is moving, but many kinds of the fields which are formed by all SCP of universe are perfect static.

The space of universe of Einstein's principle of relativity:
Important matters: Einstein's principle of relativity is mistake. But the 1 st science can not find out and understand this mistake, and the 2nd science can find out and understand this mistake. Einstein's principle of relativity hypothesizes that the space of universe is the true vacuum, and the vacuum has the function which transfer light, electromagnetic wave and universal gravitation. And in the case that the relative position between observer and the light source is changing, Einstein hypothesizes that the observer observes the light propagates straight for all 3dimension directions with constant speed. By the 2nd science, Einstein's this hypothesis is satisfied by SCP and UFES of the 2nd science. In this case, Einstein's this hypothesis only satisfied with the light propagation and the function of gravitation, but SCP and UFES of the 2nd science are satisfied with the all things of universe. For the whole universe, the 2nd science is right, Einstein's principle of relativity is wrong. It is important condition that the natural must explain the all things of universe and must make the new theories and new techniques in wide range. The all things of the 2nd science are satisfied with the abovementioned important condition.

The mechanism in which light propagates straight with constant speed is explained in the following. In the 2nd science, the light is the wave energy which is the connection of the wave component by UFES and the particle component by the individual SCP. Namely, because the light is the wave energy, the light does not receive the influence of the flying and the rotation and the revolution of earth which are not wave energy. The thing which is related to wave energy is the pressure of SCP. In order to keep the constant energy of light, it is necessary that the speed of light is faster in lower pressure, slower in higher pressure. Therefore, light is curved by the gravitation of big space body.

In the 2nd science, as the abovementioned, the universe is the global-stable- universe, universe uses the mathematical collapse at the center of globular form and makes SCP fuse to atom. Namely, the mathematical collapse make the universe. And so, the coordinate of universe has a center at the center of universe and has the 3 dimensions absolute space + time space. SCP fills up the space of universe, UFES has been distributed in the space of universe and constitutes the 1 st, 2nd and 3rd fundamental energy source at the every points of universe. And the field of SCP at the every point of universe keeps the 3 dimensions balance to the all points of whole universe. This 3 dimensions balance acts in cooperation with the whole universe in real time, there is not 'Strain of time-space' and UFES of the every points repeatedly makes SQF in proportion to the transfer of mass with acceleration at the every points, and supplies SQF as energy to the mass which is transferring with acceleration. Namely, the energy belongs to UFES, and is SQF.

And the all things in clause 165 can explain all natural phenomena and artificial phenomena simply, unconditionally and uniformly, and have the utility which create this invention, therefore, these all things are confirmed to be right.

Therefore, hypothesis, thinking, proposition and 4 dimensions super-space of 'Newton's principle of relativity' are all mistake. But, the theoretical expression of General principle of relativity has been amended to be right by Newton's 2 misapprehension and has been amend to be the right approximate expression. This incomprehensible and unknown amendment has perplexed all scientist and human society until the creation of the 2nd science.

Countermeasure:
In the universe, there are invisible parts more than visible parts, therefore, in order to understand the essence of universe, it is necessary that the 2nd science understands the essence of the invisible parts of universe, for example, hypothesis of construction, composition and function of SCP, hypothesis of constitution, distribution, propagation und function of UFES, hypothesis of fundamental element of universe, for example, NNF, FTRP, SQF, BFE, CAC, MFH, 3DUG, UGP and Natural laws. These seem impossible, but, in practice, the universe is constituted simply, unconditionally and uniformly, and especially SCP which is the most fundamental is formed very simply, unconditionally and uniformly, therefore, this inventor has completed the 2nd science by the study for 17 years.

In the case of SCP, in the space of universe, there are SCP which is moving and SCP which is stationary. Because SCP which is moving is circulating in the condition in which the total amount and the distribution of SCP are constant, the field of universal gravitation which is formed by all SCP is perfectly stationary.

Weak point of Newton's laws of motion and law of gravitation:
Weak point of Newton's laws of motion:
   This weak points are that Newton's way of thinking has not been taken over by the 1 st science:
      Newton's 2 ways of thinking in which he wished to analyzes the essence of universe are (a) mathematic analysis of observation results, for example, the law of F = a×M, and (b) brains analysis of invisible parts of universe, for example, the law of inertia and law of action-reaction. The 1st science has taken over only (a), but the 2nd science has taken over both (a) 1 st way and (b) 2nd way.

The 1 st science has stayed the science of the visible parts of universe. The 2nd science has been the science of both visible parts and invisible parts of universe. As the mention in the following, the 2nd science is more than Newton's law and is satisfied with the request of the teacher of the primary school 'Take over Newton's law', and realizes my slogan 'Tide over the past, Create the new way', in Japanese, ETSUKO. SOSHIN.

Weak point of mathematics:
Because mathematics treats the change of quantity, Newton's law of motion which is mathematic analysis of observation results can calculate the artificial unbalance phenomena which are formed by the artificial unbalance flow energy, but can not calculate the natural balance phenomena which are formed by the natural balance flow energy.

Weak point of making method of natural law:
Because Newton's law of motion is formed by observation results which is the results of the function of the force, Newton's law of motion drops 'energy source of force,' 'action speed of force,' 'relativity between force and mass' which exist in stage in which the force generates and acts. And these weak points are written in the explain books, namely, the existences are known, but causes and countermeasure are unknown.

Weak point of observation technique:
Because Newton's law of motion was formed by the technique of the 17th Century, in Newton's law of motion, there is no notion about 3 dimensions, wave dimension, rotation dimension, fundamental energy source, coexist-fusion, and balance flow energy.

Weak point of Newton's law of universal gravitation:
Newton's law of universal gravitation is formed by mathematic analysis of the facts which was observed in the 17th Century, and simple and suits the practical use, but about the essence of gravitation, has the next weak point.

Weak point by mathematics of Newton's law of universal gravitation mathematics:
The universal gravitation has many functions included 3dimensions function. But Newton's law of universal gravitation explains the function of gravitation by mathematics which calculate only 1 dimension unbalance energy.

Weak point by making method of natural law:
Because, Newton's law of universal gravitation is formed by the observation results, namely, by the results at which the function of universal gravitation completed, Newton's law of universal gravitation drops the notion of 'energy source of gravitation,' 'action speed of gravitation,' 'relativity between gravitation and mass' in the stage in which the gravitation generates and acts. Einstein's general principle of relativity calculates the stage of the function of gravitation. These drops of Newton's law are the causes that there are calculation error in Newton's law.

In the 2nd science, in the universe, between space body and space body, the field of 3 dimensions gravitation which is formed by the function of SCP comes out the 1 dimension gravitation. THIS 1 dimension gravitation is acting by the maximum propagation speed of SQF which is propagated by the function of SCP. Therefore, the size of 1 dimension gravitation between 2 space bodies whose distance is changing by speed v is {1 dimension gravitation ×{ 1 - ( v÷s ) }. Between 2 space bodies there is the boundary condition as the abovementioned.

Weak point of Einstein's principle of relativity, and unknown 2 substitution of Einstein's general principle of relativity:
These are described in the column 'Practical form of invention'. Weak points and countermeasures do not be found out by the 1 st science, but are found out by the 2nd science. The described in column 'Practical form of invention' is the newest understanding.

Until the end of the 19th Century, the laws of the 1st science are all the experience laws of visible phenomena. And mathematic analysis of Newton's 1st way of thinking are fixed in the 1 st science, and make the 1 st science and human society progress and develop. And, until the end of the 19th Century, as the abovementioned, Western culture which is subjective and has strong opinion are useful and necessary for the development of science. But, in the 20th Century, the necessities of making inexperience laws of invisible phenomena appeared, for example, propagation system of light, propagation system of electro-magnetic wave, hydrodynamics, cosmic philosophy and elementary particle physics. But, the 1st science dose not find out the necessity of the abovementioned (b) the brains analysis of the 2nd way of thinking of Newton. The 2nd science found out the necessity of the brains analysis, and, found out the necessity of the new methods which find out the inexperience laws of the invisible phenomena, and confirm that the inexperience laws are right. The confirmation of rightness of inexperience laws is that the inexperience laws can explain the all things of universe, and can make the new theories and the new techniques in wide range. And, the 2nd science found out that the all visible phenomena are the unbalance flow energy, but the all invisible phenomena are the balance flow energy. And more, in the experiment in which this inventor tried to combine the many invisible phenomena and to generate the balance flow utility energy phenomena, namely, the 2nd class permanent motion, the 2nd science found out the following facts. The 1 st fact is that SCP fills up in the universe. The 2nd fact is that SCP constitutes UFES in the whole universe. The 3rd fact is that the all natural phenomena are the 2nd class permanent motion. The 4th fact is that in the abovementioned experiment, there are many combinations of invisible phenomena, the case in which the 2nd class permanent motion generates is only one case in which the combination of invisible phenomena is 100percent right. 99percent right can not generate the 2nd class permanent motion. The scientist is quite in the dark until he find out 100percent right combination by the 2nd science. These facts show that in the study of the 2nd class permanent motion, experiment is useless, it is necessary that the theory of the 2nd science establish the all conditions of the 2nd class permanent motion. If, scientist does not know the abovementioned, he can not use the 2nd science, and thinks that there is not the 2nd class permanent motion.

In the 2nd science, (1) SCP fills up the universe, (2) SCP constitutes UFES in the whole universe, (3) the natural phenomena are satisfied with the boundary conditions which use UFES and are all the 2nd class permanent motion, (4) the 1st science does not know using method of UFES and artificial phenomena are all unbalance flow energy, (5) in the artificial phenomena, in the case in which all constitute elements keep the 3 dimensions balance, the artificial phenomena are the 2nd class permanent motion, (6) Einstein dose not know clause181, and made Principle of relativity, (7) in the international society, in order that the society becomes to be rich, peaceful and happy, it is necessary that the human society must realize the abovementioned proverb 'Tide over the past, Create the new way'.

In the case of the expression of Einstein's general principle of relativity, by the 2 substitutions about Einstein's misunderstandings, the wrong hypothesis of constant light speed exchanges for the right hypothesis of constant SQF propagation speed, and the principle of relativity exchanges for the principle of relativity between force speed and mass speed. As a result, 'Einstein's general principle of relativity exchanges for 'the right principle of relativity between force speed and mass speed. This is the explanation of calculation error of Newton's law of motion.

As abovementioned, regardless of known or unknown, Einstein's general principle of relativity has exchanged for the principle of relativity between force speed and mass speed. But, in practice, in the condition in which the exchange does not be noticed, Einstein's principle of relativity is trusted, and has become the fundamental theory of the 1 st science. Until, the 2nd science has been created, there is no theory which can point out the weak point of Einstein's principle of relativity, couldn't help it.

Look objectively, Einstein's principle of relativity is a mathematic analysis of operate form of universal gravitation. The difference between Newton and Einstein is the difference between analysis of result and analysis of operate form.

The universal gravitation generates inertia and action-reaction. The 2nd science can explain the energy source of inertia and action-reaction, therefore, the 2nd science can explain abovementioned (a) and (b), in other words, can explain the all things of universe.

The 1 st science can treat only the abovementioned (a) which are treated by the mathematic analysis of observation results, and can not treat the abovementioned (b) which dose not be treated by the mathematic analysis of observation results. In the 1st science, there is only (a), couldn't help it.

Because Japan culture sticks to the essence of universe, this inventor created the 2nd science which treats both (a) and (b).

The purposes of the 2nd science by this inventor are the progress and development of science, and the establishment of peace and happiness of human society.

Weak point of Einstein's principle of relativity:
This inventor has be doubting Einstein's principle of relativity from his childhood.

Fundamental weak point of 'Strain of time-space':
   In the result of study by the 2nd science, the universe is the global-steady-universe, and Time and Space keep the 3dimensions balance in the whole universe, and Time and Space form the action standard of all universal elements which keep the 3 dimensions balance in the whole universe. Therefore, there is not 'Strain of time-space' in universe. Einstein has 2 misunderstands, and these 2 misunderstands have changed wrong 'Strain of time-space' for right 'Strain of field of UFES', therefore, Einstein's general principle of relativity can correctly calculate the function of universal gravitation.

Weak point of evidence:
   Evidence is only that the function of universal gravitation is acceleration, therefore, 'Einstein's general principle of relativity' is a experimental expression of universal gravitation. The right fundamental law can explain all things of universe and can make new theory and new technique in wide range.

For example, light velocity changes by the change of light propagation medium and the change of universal gravitation. Fundamental laws must explain the abovementioned change of light velocity. The 2nd science can do so, but principle of relativity can not do so.

Therefore, 'Einstein's general principle of relativity' is a approximate expression of universal gravitation.

Weak point of hypothesis:
Einstein hypothesizes that the universe space is true vacuum, in the universe space, there is a natural system in which in spite of movements of light source and observer, the light propagates with light propagate velocity c. And, Einstein uses this hypothesis and creates the approximate expression of universal gravitation, and Einstein dose not touch the mechanism of the abovementioned hypothesis.

In order to explain the all things of universe, the construction, composition and function of SCP, UFES, NFF, FTRP, SQF, BFE, CAC, MFH, 3DUG and UGP of the 2nd science were formed. SCP and UFES et cetera can explain the all things of universe, of course, can explain Einstein's hypothesis. Einstein's hypothesis is all of Einstein's general principle of relativity, but, Einstein's hypothesis is only one part of the 2nd science. And, the 2nd science can explain Einstein's hypothesis by energy system of light.

Light is a wave energy which is the combination of the wave component which is SQF of UFES and of the particle component which is SCP. UFES is fixed in the space of universe, therefore, SQF of UFES of light are fixed in the space of universe after radiation from light source. SCP of the particle component is moving freely, but the position of light is fixed by the wave component. Flying of the earth, rotation of the earth, revolution of the earth are not wave energy, therefore, flying, rotation and revolution of the earth are unrelated to the propagation of light. And more, because light is wave energy, the energy of light is decided by both the value of field of universal gravitation of SCP and the frequency of light. Therefore, as the following 7), in order to keep the fixed constant energy, light velocity c changes with inverse proportion to the pressure of SCP by universal gravitation. This change is larger at bigger pressure, and near the center of universe the light velocity c is near 0, near the circumference of universe the light velocity c is near the maximum propagation velocity s of SQF of UFES.

In the 2nd science, the fastest velocity in the universe is the maximum velocity s of propagation of SQF of UFES without transfer of mass. THIS velocity s is faster than the light velocity c on the earth. The maximum velocity s =the light velocity c xn (n > 1).

This fact shows that in the propagation of light, the SQF of UFES propagates ahead of the light propagation. Namely, the field of light propagates ahead of light itself. And, this inventor supposes the next, this phenomena is confirmed by the experiment in which the laser light passes a laser generate element in which there is the super propagation of laser, faster than ordinary light. The difference of velocity makes the light propagation. As the abovementioned, the SQF of UFES is wave component of light wave, the rotation of SCP is particle component of light wave.

Weak point of Einstein's thinking, proposition and strain of time-space:
The 1st science which is the mathematic analysis of observation results and can not explain the essence of universe, can not find out the mistake of Einstein's principle of relativity. But the 2nd science which finds out SCP, UFES, NFF, FTRP, SQF, BFE, CAC, MFH, 3DUG and UGP and can explain the all things of universe, can find. out the all mistakes of Einstein's principle of relativity.

The 1 st science and Einstein's principle of relativity have the same mistakes, namely, the 1 st science and Einstein use only the mathematic analysis which is the abovementioned part (a) of Newton's way of thinking. The 1st science and Einstein have no interest in the brains analysis of invisible parts of universe, namely, (b) which is Newton's way of thinking.

The 1 st science is the science of mathematic analysis of visible parts of universe, Einstein's general principle of relativity is the science of mathematic analysis of function of universal gravitation. Einstein's principle of relativity is one part of the 1st science. General is mistake of naming.

The 1st science can not find out the mistake of Einstein's principle of relativity, but the 2nd science can find out the mistake of Einstein's principle of relativity. But the expression of Einstein's principle of relativity has been changed by the following 2 substitution for the approximate expression of the function of universal gravitation whose calculation accuracy is very high.

Until the 2nd science was created, the 1st science believed that Einstein's principle of relativity was right.

Weak point of understanding of mathematics:
In the mathematic analysis, it is necessary that the all boundary conditions of mathematic analysis are right. About the mathematic analysis, in the real universe which includes natural and artificial phenomena, or visible and invisible phenomena, fundamentally, at the every position of all phenomena, UFES separately and individually exists and is acting. Therefore, in the mathematic analysis of the real universe, CAC must be established at the every position of all phenomena, and the every function of every CAC must keep balance to one another in whole phenomena, and these facts must be expressed by mathematics. The 1 st science, Newton's laws, Einstein's principle of relativity do not understand clause 204. The cases which are satisfied with clause 204 are right, the cases which do not be satisfied with clause 204 are wrong. Because the observation results of light, electro-magnetic wave, temperature, force and pressure are changed by observation positions, therefore, same observation results of same positions of same phenomena are varied with one another by the difference of observation position. By these things which were unknown until the creation of the 2nd science, the hydrodynamics, the quantum theory and cosmic philosophy are very different from real phenomena.

Amendment of Einstein's general principle of relativity by 2 substitutions:
Einstein's general principle of relativity has 2 substitutions which are 'light velocity c substitutes for velocity s of SQF of UFES' and 'general principle of relativity' substitutes for 'relativity between force velocity and mass velocity'.

Amendment by the 1 st substitution:
In the general principle of relativity, Einstein hypothesized 'light velocity c xt' to 'the space unit of time'. In this case, 'light velocity c' is used as length unit in geometry, therefore, unit of time must be fixed constant in the whole universe.

As abovementioned, by the 2nd science, in the universe, the fixed constant length is the propagation velocity of universal gravitation and not light velocity c. Therefore, in the general principle of relativity, Einstein's mistake is relieved, 'the space unit of time' is changed from 'light velocity x t' to 'universal gravitation velocityxt', and 'strain of time-space' is changed to 'strain of SQF of UFES.

Amendment by the 2nd substitution:
Einstein's general principle of relativity is the thinking, proposition and 'strain of time and space' about 'relativity of coordinate (observer) and natural phenomena'.

But these thinking, proposition and 'strain of time-space' do not exist in universe.

As abovementioned, by the understanding of the 2nd science, Einstein used the facts that a coordinate is satisfied with the boundary condition of the function of the field of universal gravitation, and is moving accelerated, in the results, in this coordinate, the state of function of field of universal gravitation generates, the expression of general principle of relativity is formed.

Expression of general principle of relativity shows the distribution of size of function of field of universal gravitation, namely, 'strain of SQF of UFES'.

In the state of the function of field of universal gravitation, there are 'function velocity of force' and 'relativity between force and mass velocity' of the field of universal gravitation.

The other hand, Newton's law of universal gravitation which analyzes the observation results of the state in which the function of universal gravitation completed between 2 mass, dose not have 'function velocity of force' and 'relativity between force and mass velocity' of the field of universal gravitation.

The difference of existence or nonexistence of 'function velocity of force' and 'relativity between force and mass velocity' are the reasons in which the approximate calculation accuracy is better than the accuracy of Newton's law of motion.

After all, as abovementioned, in the theoretic expression of Einstein's general principle of relativity there is not the thinking, proposition and 'strain of time-space' about 'relativity between coordinate (observer) and natural phenomena', instead of these, there are natural laws which are 'function velocity of force' and 'relativity between force and mass velocity'.

In order to analyze the essence of universe, it is necessary that the scientist finds out, understands and uses the all universal elements, for example, SCP, UFES, NFF, FTRP, SQF, BFE, CAC, MFH, 3DUG, UGP and all natural laws. And in the case in which the scientist finds out and analyzes a phenomenon, he must use the abovementioned all universal elements, and analyzes not only the phenomenon but also all things of universe, and must use the abovementioned universal elements and must make new theory and new technique. In order to get the right universal elements and natural laws, it is necessary that the scientist must make up the abovementioned all things, because almost all universal elements are invisible and almost all universal elements do not have evidence, and the method in which the scientist confirms his works are all right is only the abovementioned method.

In the 2nd science, universe is the global-steady- universe, mathematic collapse at the center of global universe has been established atom fusion and BIGBANG, and the universe is filled up with SCP, and the mutual functions of all SCP have been finished to propagate in all universe, and have been finished to constitute UFES individually and separately at the all positions of universe. SCP has been finished to constitute UFES et cetera.

In the real universe, SQF of UFES propagates by the SQF maximum propagation velocity s. The size of function of universal gravitation between 2 space bodies whose mutual distance is changing by velocity v = [universal gravitation × {1 - (v ÷ s)}].

In the amended expression of Einstein's general principle of relativity, the size of function of universal gravitation = [universal gravitation × {1 - v÷ (s÷n)}]. The abovementioned realization shows that this Einstein's expression acts the function as same as function of the universe constitution which is made by the 2nd science. But the function of this case is one fundamental function of universal gravitation. And this expression is an experimental expression which is able to use in the range of experiment, and dose not theoretic expression.

Countermeasure of space philosophy:
In the 2nd science, because every phenomenon is one part of universe, all individual phenomenon and whole universe must be explained simply, unconditionally and uniformly, and the 2nd science is able to explain every phenomenon and whole universe simply, unconditionally and uniformly, and the space philosophy of the 2nd science is that the universe is the constant diameter global-steady-universe, SCP is filled up in the universe, SCP constitutes UFES in the universe, UFES is larger at center side is smaller at outer side, SCP is compressed and fused to atom at the center of global-steady-universe, and BIGBANG occurs at the center of universe and generates space bodies, generated space bodies are flying from the center to circumference of universe, and the flying velocity of space bodies are accelerated in order to keep constant energy. Space philosophy of the 1st science must reset to the abovementioned 2nd science.

In this time, human society has many problems, for example, trouble of globalization, magnification of deference between rich and poor, trouble of resources, trouble of poor and hunger, trouble of terrorism, trouble of nationalism and historical trouble. In order to remove these trouble, it is necessary that human society must make the great tide which go over the past. Power and method which make this great tide are the abovementioned essence of universe, the 2nd science and the 2nd class permanent motion. Announcement of the new theories of universe by Space philosophy will be the start of the new tide.

Countermeasure of elementary particle physics:
The right natural laws must explain all things of universe, and must make new theories and new techniques. In the elementary particle physics, all subject of study are invisible, therefore, in order to study elementary particle physics, it is necessary that this inventor has collected all observation results of phenomena which are formed by elementary particles, for example, 3 dimensions universal gravitation, universal gravitation of earth, light, laser, electro-magnetic-wave, high density electro-magnetic-wave, electric current, super conduct electric current, static electricity, photo-electric et cetera, and this inventor has finished to study the construction, composition and function of SCP, and constitution, propagation, function and energy of UFES, and all fundamental element of universe. In this case, because there are sufficiently much information, this inventor has finished the study easily. If, this inventor studied only SCP and UFES, could not create the 2nd science.

The real universe is formed simply, unconditionally and uniformly, therefore, the essence of elementary particle is understood by many information of wide range.

At this time, in the 1st science, the natural law which does not be explained by mathematics can not be approved. This fact obstructs the progress and development of the 1 st science.

At this time, elementary particle physics of the 2nd science has finished the study of character of phenomena. In the 2nd science, elementary particle physics must study the quantity of phenomena.

Elementary particle physics must understand SCP.

Elementary particle physics must understand the constitution in which SCP explain simply, unconditionally and uniformly micro-phenomena and macro-phenomena.

Elementary particle physics must finish construction, composition and function of SCP which can explain all things of universe.

By the 2nd science, the unknown particles which are generated by the clash in Accelerator are the random fragments of broken particle. And the mass of random fragments are able to be controlled by the change of clash energy.

By the 2nd science, on the random fragments, static electricity is generated by the friction of oscillation of heat of clash. The overabundant static electricity generates the anti-proton and the anti-electron.

Elementary particle physics must understand that SCP has the minimum unit of mass, electric charge, magnetism, static electricity, and the construction, composition and function which can make the abovementioned elements fulfill own functions.

Elementary particle physics must understand the fuse constitution in which SCP are fused to atom, and the fission constitution in which atoms are fused to SCP.

Elementary particle physics must understand the calculation method of function of force in the micro domain. In the micro domain, the strength of the universal gravitation per unit area becomes the multiple which is the 7 continued product of reciprocal of reduction ratios of particle. There is not quantum mechanics in the universe.

Elementary particle physics must understand that the static electricity is the allotment nucleus force which allots all electric charge to the correct particles.

Elementary particle physics must understand that UFES is constituted by the 3 dimensions balance of all SCP in the whole universe, and at the every positions of universe, individually and separately generates the position setting function which keeps 3 dimensions balance. This position setting function generates SQF in proportion to the accelerate moving of mass at the every positions individually and separately. And this SQF is supplied to the mass as the energy of motion.

Elementary particle physics must understand that the artificial force which is unrelated to UFES dose not have the position setting function, therefore, the artificial force is coexist-fused with UFES, and generates the artificial phenomena.

Elementary particle physics must understand that in the macro phenomena, SCP is rotating in random direction and acts as the macro powers of universal gravitation, electric, magnetic and electrostatics, and in the micro phenomena SCP is contracted to very small and is rotating with fixed direction and generates the nucleus forces of universal gravitation, electric, electrostatic.

Elementary particle physics must understand that the arrangement and constitution of neutron, proton and electron in the atom, the arrangement and constitution of SCP in neutron and proton, and the arrangement and construction of negative electric element in electron.

Elementary particle physics must understand the essence of N-type semi-conductor and P-type semi-conductor by the construction, composition and function of SCP for the next generation technique.

Elementary particle physics must understand the essence of all energy which are used in human society, for example, light, electric current, electric field, magnetic field, electromagnetic wave, static electricity, heat, chemical reaction, force and pressure by the construction, composition and function of SCP for the next generation technique.

Elementary particle physics must understand the essence of metal, inorganic matter, organic matter, solid, liquid and gas by the construction, composition and function of SCP for the next generation technique.

Elementary particle physics must understand the essence of sense organ, move organ, heredity, microbe and bacillus by the construction composition and function of SCP for the next generation technique.

Elementary particle physics must explain the all things of universe simply, unconditionally and uniformly.

After this, this inventor will studying the 2nd science together with my old school OSAKA University.

Countermeasure of Elementary particle physics:
   Elementary particle physics must cooperate with electromagnetism, optics, dynamics, hydrodynamics, thermodynamics, chemistry and wide ranges. The reasons of this work are that there are many natural phenomena which are explained by the construction, composition and function of SCP in electromagnetism, optics, dynamics, hydrodynamics, thermodynamics, chemistry and wide ranges, and the studied results of elementary particle physics are useful for wide field. Previous common sense 'studied results of elemental physics does not use immediately' is mistake. The reason of useless is that the studied results are wrong. The right studied results of fundamental physics are useful in wide field immediately.

in order to reset the 1 st science to the 2nd science, the 1 st science must accept and use SCP, UFES, NFF, FTRP, SQF, BFE, CAC, MFH, 3 DUG and UGP.

7) Example of amendment of observation results:
   This shows that the 2nd science is right.

In this case, the 1st science does not have not only the natural laws which find out necessity of this amendment, but also the natural laws which show the amendment method. This clause shows the amendment example of inclination of observation results.

In the case in which the inclination of observation results dose not be amended, the temperature of sun by light is 6000 ° K, and by electromagnetic wave is 300000 °K.

The 1 st science hypothesizes that light is the same energy as electromagnetic wave, but this hypothesis is wrong. Light is the wave energy of universal gravitation field, the electromagnetic wave is the wave energy of the electromagnetic field.

The solution of the simultaneous equation of the essence of observation results of sun by light and the essence of observation results of sun by electromagnetic wave is the sun temperature 15milion °K.

This facts shows that the laws which are in accord with observation results in limited range are wrong, and the right laws can explain all things of universe simply, unconditionally and uniformly.

And more, this facts shows that the heat oscillation of 6000 ° K atom in UFES on the earth is the same oscillation as the heat oscillation of 15miliom ° K atom in UFES on the sun, and the rotation of 300000 ° K SCP in UFES on the earth is the same rotation as the rotation of 15milion ° K SCP in UFES on the sun. In this case, the energy on the earth is the same energy as the energy on the sun.

1. Light is the rotation dimension wave energy of rotation of mass-element of SCP which is generated by the heat oscillation of atom, electromagnetic wave is the 2 phase-rotation dimension wave energy of 2 phase-rotation of electric-element of SCP which is generated by the heat oscillation of SCP.

2. Light and electromagnetic wave have the energy in the following 5, and are keeping this constant energy and constant frequency, and are changing wave length and propagation velocity in anti-proportion to UFES, and so, are propagating with constant energy which pass in one unit time through one unit sectional area.

In the case of Wien's variation law, in the case of light which is the wave energy of universal gravitation by rotation of SCP by heat- oscillation of atom, the proper frequency of atom is decided by the construction of atom and is irrelevant to temperature, the proper rotation number of SCP which is in proportion to the heat-oscillation of atom is decided by the construction of black body. Therefore, in the case in which temperature changes, the range of proper rotation number of SCP dose not change, in the case in which temperature rises, the frequency rises and wave length shortens, therefore, Wien's variation law Light quantity maximum wave length λmxtemperature=constant' is approved.

In the case of electromagnetic wave, SCP is rotating with the proper rotation number which is decided by temperature, and SCP is rotating in the random direction, therefore, at every position, the number of SCP whose rotation axes face to the same direction are all same. As a result, there are the electromagnetic wave which are propagating to all direction in 3 dimensions. This electromagnetic wave, as the same as light, is approved in ' Wien's variation law.

The abovementioned 3 and the observation method of Wieb's variation law can decide that Wien's variation law is able to use on earth and on sun.

Energy expressions of light and electromagnetic wave are formed by the abovementioned 1-4.

The case of light from sun:
Light energy which propagates and passes in one unit time through one unit of sectional area = UFES × (light frequency × wave length) × (line number per one unit area of SCP which are in one line and are rotating to propagates light x light energy which is propagated by one line of SCP).

The essence of light is supposed to be the rotation of the mass elements of SCP which are in lines to the direction of light propagation. By this supposition, the essences of light, for example, generation, propagation and function mechanism of light, mechanism in which light can propagate from one end to opposite end in universe, mechanism of refraction and interference, laser generate mechanism, the essence of laser are explained simply, unconditionally and uniformly.

Light is the wave energy of sin-curve of rotation of mass-element of SCP which is generated by heat-oscillation of atom. The energy source of light is UFES which exists and works at the every position of universe. The propagation velocity of light changes in inverse proportion to UFES, and is slower nearer sun, and is foster farther sun. In the abovementioned expression, the clause which is same in sun and earth is omitted from the expression. (UFES of sun ×wave length of light in sun) = (UFES of earth x wave length λm of light in earth) ···· (1)

In the case of electromagnetic wave:
Energy quantity of electromagnetic wave which is passing through one unit area in one unit time by the rotation of SCP = UFES × [propagation velocity of electromagnetic wavex number of lines in one unit area of SCP which are in lines and generate and propagate the electric energy (this is a square root of electromagnetic energy) × electric energy which propagates through one line of SCP in one unit time] × [propagation velocity of electromagnetic wave x number of lines in one unit area of SCP which are same as SCP which generate electric energy generate magnetic energy (this is a square root of electromagnetic energy) whose phase differs 90 ° from electric energy × magnetic energy which propagates through one line of SCP in one unit time] = UFES x square of {( frequency of electromagnetic wavex wave length) x number of lines in one unit area of SCP which generate electromagnetic wavexa square root of ( electromagnetic energy which propagates through one line of SCP in one unit time) }, namely, the energy of electromagnetic wave is the electromagnetic energy by the rotation of SCP.

The abovementioned expressions are formed by the clause to calculate the temperature of sun.

The 2nd science can explain the details of constitution of light and electromagnetic wave.

In the case which uses the existing theory, it is necessary to confirm the applicable range of this existing theory.

In the 2nd science, all things of universe are formed from SCP, therefore, in all things there are something common each other, but these are partial similarity.

In the 1 st science, the law is formed from the mathematic analysis of observation results, therefore, the expression of the law is a experimental expression. This experimental expression has utility in the range in which experiment was carried out, but dose not show the essence of unuverse.

But, until now, the 1st science has misunderstood that the law which has utility shows the essence of universe. As the result, the 1 st science has forgotten and abandoned the abovementioned (b) of Newton's way of thinking. On the contrary, the 2nd science is the science in which the abovementioned (b) has improved and developed.

Hydrodynamics, cosmic philosophy, elemental particle physics which have forgotten the abovementioned (b) of Newton's way of thinking have stagnated. The causes of this stagnation are not the shortage of ability, budget and effort, those causes are forgetting of the abovementioned (b) of Newton's way of thinking. These facts shows that the inclination of the observation results must be amended, and the 1st science must change the mathematic analysis to the methods of the 2nd science, namely, to the abovementioned (b) of Newton's way of thinking, and the 1 st science must study the abovementioned SCP, UFES, NFF, FTRP, SQF, BFE, CAC, MFH, 3 DUG and UGP, and the 1st science must reset to the 2nd science, and in the 2nd science all things are simply, unconditionally and uniformly. In the abovementioned cases, the 1st science can not find out the inclination of the observation results, the 1 st science do not know the method which amends the inclination.

In the abovementioned expression, clauses which are the same in both sun and earth are omitted. UFES of sun x square of wave length of electromagnetic wave in sun =UFES of earth x square of wave length of electromagnetic wave in earth.··· (2)

6. About the light, abovementioned expression (1) is changed by Wien's law, UFES of sun ÷ temperature of sun = UFES of earth ÷ temperature of sun 6000 ° K by light before amendment.

7. About the electromagnetic wave, abovementioned expression (2) is changed by Wien's law, UFES of sun ÷ square of temperature of sun = UFES of earth ÷ square of sun 300000 ° K by electromagnetic wave before amendment.

8. The result of calculation of simultaneous equations by clauses 6 and 7 is temperature of sun 15million ° K.

These facts show that the observation results must be amended, the 1st science can not find out the necessity of amendment of observation results, and the 1 st science dose not know the method of the amendment.

In hydrodynamics, cosmic philosophy and elementary particle physics there are inclination of observation results without exception.

The 1 st science is the visible parts science in which the real universe has been exchanged to the visible parts universe which is formed by only visible parts. In this time, the human society which is controlled by Globalization with competition rule has many troubles. The cause of these troubles is the Globalization with competition rule, therefore, the Globalization with competition rule must be exchanged to the Globalization with 'the natural law principle' which is written in column 'effect of invitation'.

The 1st science must reset to the 2nd science.

In the expressions of clause 6 and 7, the UFES of sun is 2500 times of the UFES of earth. The field of UFES which is formed at the earth by all SCP of universe is about 130 times of the field of UFES of earth. This about 130g has constituted the earth.

On the surface of 15 million ° K of sun, SCP is fused to Hydrogen, on other side, cosmic rays generates, the balance of the both is kept. At the center of sun, heavy elements are fused and generate small BIGBANG and the fragments appear on the surface of sun as sunspots.

The number of sunspots change in 11 years period, the sunspots which are formed by heavy elements form black-hall, and seem to black.

In the sun, because UFES of sun is very large, all forces are very large, at high temperature of sun is same as usual temperature of earth the construction and the function are stable, and the sunspots have magnetism.

Cosmic philosophy of the 1st science must change all of them.

Subjects solved by this invention are (A) Subject of science and technique and (B) Subject of human society.

The 1 st subject is the science and technique
The 1 st subject is that finding out the method which understand the essence of invisible parts of universe, and understanding the essence of the whole universe, and understanding all things of universe are the 2nd class permanent motion, and establishing the method which make and use the artificial 2nd class permanent motion.

Selection an training of way of thinking and method:
Necessary way of thinking and method are that the ability which can judge right or wrong of fundamental theory constitution, and finding out SCP which constitutes all things of universe, and finding out UFES which are energy source of all things of universe, and finding out NFF, FTRP, SQF, BFE, CAC, MFH, 3 DUG and UGP, and finding out all natural laws, and effort and continuation for the perfection of all finding out.

Japan culture is suit the abovementioned effort and continuation.

Weak point and countermeasure of the 1 st science :
Weak points are the mathematic analysis and visible evidence, countermeasure are the abolition of mathematic analysis and visible evidence.

Hypothesis of energy source, universe and elemental particle:

Hypothesis of energy system:
SCP fills up in universe, SCP has constituted UFES at the every positions of universe, UFES exists at the every positions of universe, UFES works individually and separately as energy source, UFES makes SQF in proportion to motion of mass, SQF is supplied to the mass as energy of motion, SQF reverses and after action dose not leave any change.

UFES: the 1st fundamental energy source, the 2nd fundamental energy source
The 1 st fundamental energy source is the 3 dimension universal gravitation energy source, and is formed by the rotation of mass elements of SCP, the 2nd fundamental energy source is the 3 dimensions electromagnetic energy source.

Native dimension force:
Native dimension forces are gravitation, light, electromagnetic wave, electric current et cetera, and are formed by the rotation of SCP which are in small range, therefore, these have native dimensions, namely, 1 dimension, oscillation dimension, rotation dimension, flow dimension, these have not the balance of 3 dimension, therefore, these can move the mass, but have not energy source, these must act coexist-fusion with UFES to act the function.

Coexist-fusion can fact by the following boundary conditions.

Coexist-fusion:
In the space of universe, in the case in which the laws of 2nd science 'balance flow condition' and 'independency of the 2nd class permanent motion' are satisfied with the phenomena, in this phenomena UFES and native dimension force forms coexist-fusion, this phenomena becomes the 2nd class permanent motion.

Therefore, in the artificial phenomena, the boundary conditions ' balance flow condition' and ' independency of the 2nd class permanent motion' are satisfied with this artificial phenomena, this phenomena becomes the 2nd class permanent motion.

The hypothesis of universe and elemental particle:
SCP of construction, composition and function which make the all matters, all energy, all phenomena of universe, fills up in universe.

Universe uses the collapse of mathematics at the center of global universe, and compresses SCP and fuses SCP to atom at the center of universe, the mass of atom grows until the limit of collapse of mathematics and generates BIGBANG and all space bodies. The 1 st BIGBANG generates some big fragments, big fragments generates the 2nd BIGBANG and makes many small fragments and the net construction by many small fragments, and small fragment generates the 3rd GIGBANG and changes galaxy, and the 4th BIGBANG is explosion of super nova. All space bodies are flying from center to circumference of universe, UFES is greater at center smaller at circumference of universe, therefore, the flying velocity is smaller at center greater at circumference, the space bodies arrive at the circumference, outer side of the circumference there is no SCP and NFF, therefore, all space bodies split to SCP, split SCP returns to the center of universe and fuses to atom.

In the abovementioned universe circulation, the total mass and distribution of SCP dose not change, therefore, the universe repeats the same circulation without change eternally.

Hypothesis of construction, composition and function of SCP, and hypothesis of UFES:
These hypothesis must explain all things of universe, and must make new theory and new technique in wide range.

Creation of the 2nd science and the method which confirm that the 2nd science is right:
In order to create the 2nd science, it is necessary that scientist must understand and use the construction elements of universe, for example, SCP, UFES, NFF, FTRP, SQF, BFE, CAC, MFH, 3DUG and UGP et cetera, and must confirm that these construction elements make new theory and new technique.

Creation of the 2nd science:
At first, this inventor tried to find out the construction, composition and function of SCP by the existing data of universal gravitation, light, laser, electric field, magnetic field, electric current, super conductivity, electromagnetic wave, electric charge, static electricity, and the 1 st hypothesis of SCP which was created at the 1st try has small omission but has no mistake, because the constitution of universe is simple, unconditionally and uniformly from the view point of SCP. The almost right SCP make this inventor create the 2nd science.

Subject to science:
This subject is finding out that the universe is constituted by the elements of universe, namely, SCP, UFES, NFF, FTRP, SQF, BFE, CAC, MFH, 3DUG and UGP et cetera, and all natural things of universe are the 2nd class permanent motion, and the method which make the artificial 2nd class permanent motion.

The 2nd subject is human society:
By the 2nd science, the universe which has limited space, limited mass and limited energy is able to circulate eternally by the laws ' Perfect division of work, perfect conference of work, struggle 0 rule', ' Balance flow energy rule' and ' Independence of the 2nd class permanent motion', therefore, human society which has limited space, limited resources and limited energy must have the abovementioned same laws. The details of this subject is shown in column ' Effect of invention'.

This invention uses the laws of the 2nd science. These laws are formed by the element of universe, namely, SCP, UFES, NFF, FTRP, SQF, BFE, CAC, MFH, 3DUG and UGP et cetera, and are able to explain all things of universe, and are able to make new theory and technique.

Claim 1
The way of thinking of Claim is that the natural fluid flow is the 2nd class permanent motion, therefore, this inventor, at 1 st, understands the energy system of the 2nd class permanent motion of natural fluid flow, and at 2nd, understands the energy system of the 2nd class permanent motion of light, electric current, super conductivity, electromagnetic wave, and at 3rd, makes the invention as the copy of the abovementioned natural 2nd class permanent motion.

In the 2nd science, the natural flow of water is flowed by UFES, UGP and FTRP, and is the 2nd class permanent motion. The flow of the existing fluid machine is flowed by the pressure difference, and is unrelated to the 2nd class permanent motion.

Hydrodynamics of the 1st science has omitted SCP, UFES et cetera, therefore, calculation of hydrodynamics is unrelated to the truth.

I. The 2nd science understands the natural fluid flow as the following.
   □. The natural fluid flow of natural phenomena and the artificial fluid flow of phenomena of this invention are the 2nd class permanent motion, because the all elements of universe in these phenomena keep the 3 dimensions balance.

II. The essence of energy of fluid flow of natural phenomena and the phenomena of this invention is the work load of atmospheric pressure, water pressure and dynamic pressure of water.

III. In the case all elements of universe keep the 3 dimensions balance in the phenomena, UFES generates SQF in proportion to the flow of fluid, and SQF is supplied to the flow of fluid as energy of the 2nd class permanent motion.

IV. All elements of universe keep the 3 dimensions balance, and simultaneously act the position setting function at the every position in the phenomena. In the open space of air and water, the position setting function works to 3 dimensions, but in the artificial closed space of air and water, the position setting function works to the axial direction and circle direction perpendicular to axis. Therefore, in the flow of the air and water in the tube, UFES generates the flows which is axis direction and circle direction perpendicular to axis.

This phenomena do not be found out by the study of air and water, but in the study of the wide range which contains the flow of air and water, light, laser, electric current, super conductivity, electromagnetic wave, are able to be found out.

V. In the case keep 3 dimensions balance, UFES is strained to the direction of fluid flow and generates SQF, and SQF is supplied to the fluid flow as energy. The 3 dimensions balance of all elements of universe is called 'balance flow energy rule' as the boundary condition.

VI. All elements of universe exist and work at the every positions independently and separately.

As the result, the energy at the every position of the all phenomena is supplied as the 2nd class permanent motion by UFES which exists and works the same every position.

This is the most important thing. This is called 'independence of the 2nd class permanent motion'. In the case that the extra energy acts in the phenomena, in this phenomena, 'independence of the 2nd class permanent motion' are collapsed and this phenomena dose not be the 2nd class permanent phenomena.

VII. SQF of UFES is that the random rotations of mass elements of SCP are arranged to the direction of the function of UFES, and makes the number of line of SCP in proportion to the size of action.

Therefore, in the open space, until all SCP which exist at the every position are settled, many kinds of SQF are able to overlap on the same positions. But, in the artificial phenomena, usually, SQF are unable to overlap on the same position, in order to overlap, it is necessary that all boundary conditions must be arranged as this invention.

VIII. In this invention, the size and figure of SQF of UFES and the size and figure of flow quantity which are generated by the flow quantity generate means, and the size and figure of SQF of UFES and the size and figure of flow quantity which are generated by the combination of UFES and size and figure of flow route, are arranged to the same, and in this conditions, in the flow quantity generate means in the flow route, the energy of flow quantity and the energy of SQF of UFES are overlapped. One of the overlap keeps the flow quantity, other of the overlap generates out put energy. In this invention, the fluid flow is BFE, therefore, in the energy system, Newton's law of motion, law of inertia and law of action-reaction are simultaneously working. In the existing fluid machine, law of inertia and law of action-reaction do not work.

Claim 2
The invention of claim 2 is that inventor use the fluid flow and make and use the 2nd class permanent motion machine, and get the new energy source. There are 2 fundamental types, one of them is the pass through type, and another of them is circular type. The pass through type is formed by a motor, an electric generator, an fluid flow generate means which combines watermill or air mill, reducing or expanding flow route, reducing and expanding flow route and setting in the open air or water. The circular type is formed by a motor, an electric generator, an fluid flow generate means which combines watermill or air mill, reducing and expanding flow route, circular route and fluid hold and supply means. These way of thinking are as following. □. The circle component of SQF of UFES which is generated by the fluid flow generate means is subrogated by inertia and the load of motor becomes the energy which keeps the axial direction flow quantity and the load of the generator without out put. And the load of motor is constant unrelated to the out put of generator.

The fluid flow generate means generates the formal fluid flow and formal SQF of UFES and FTRP in the invented machine, and this FTRP generates the attended overlapping SQF of UFES in the invented machine. After all, in the invented machine, there are 1 formal fluid flow, formal and overlapping SQF of UFES, 1 formal FTRP. And formal SQF of UFES generates the formal fluid flow, and the overlapping SQF of UFES generates the output of the electric generator. This energy is the 1 kind of the inertia and the action- reaction.

II. After the boundary conditions of the invented machine are arranged, in the invented machine there are phenomena shown in the abovementioned □. These facts are this invention.

III. The fluid flow generate means can generate the fluid flow as same as the fluid flow which is generated by universal gravitation. And the fluid flow generate means generates the sin wave axial acceleration and the sin wave circle acceleration perpendicular to axis.

IV. In the case in which motor, generator and the fluid flow generate means which combines watermill or air mill are connected by one axis, the energy system of this invention becomes the system as same as the energy system of natural fluid flow.

V. In order to construct the 2nd class permanent motion, or, the 2nd class permanent motion machine, it is necessary that the every flow quantity which pass through each sectional area in unit time are equalized, and the every mass of flow which SQF of UFES works in each sectional area in unit time are equalized, and SQF of UFES generates the axial cycle circuit and the circle cycle circuit which SQF of UFES works to same mass of fluid in each sectional area.

VI. In order to construct the 2nd class permanent motion, or, the 2nd class permanent motion machine, it is necessary that there is no resistance in the fluid flow: This condition violates common sense. But the condition □ which flows the fluid by UFES, SQF, FTRP, 3DUG and UGP keeps the no resistance condition.

VIII. In order to construct the 2nd class permanent motion, or, the 2nd class permanent motion machine, it is necessary that the abovementioned natural law 'perfect division of works, perfect conference of works, struggle 0 rule' is understood and popularizes.

The universe satisfies I-VIII, and eternally permanent. This inventor hope that the human society which is one part of universe makes effort to satisfy I-VIII, and complete it, and become to be rich, peaceful and happy eternally permanently.

License and know-how will be given to country, enterprise which understand and cooperate ' Natural law principle' which is shown in column 'effect of invention'.

In order to understand this invention, it is necessary to understand the 2nd science.

Claim 3
The invention of claim 3 is the invention of blade of the fluid flow generate means which is formed by the balance flow curved surface. This blade is used in claim 1~claim 13.

4) Claim 4
   The invention of claim 4 is the invention in which the fluids do not expand or contract.

5) Claim 5
The invention claim 5 is the invention in which the fluids are burning gas or steam.

The existing turbine uses only the energy of expansion of the burning gas and steam, claim 5 adds the energy which UFES gives to the motion of the mass of burning gas or steam.

6) Claim 6
   The invention of claim 6 is the invention of compression method of gas. Claim 6 compresses the gas by BFE of gas without artificial energy. Claim 6 generates and keeps BFE of gas flow.

7) Claim 7
   The invention of claim 7 is the invention of gas-turbine, jet-engine and steam-turbine, claim 7 adds the energy which UFES gives to the motion of the mass of burning gas or steam.

8) Claim 8
   The invention of claim 8 is the invention of vacuum-cleaner, claim 8 adds the energy which UFES, FTRP, SQF, 3DUG, UGP gives to the motion of the mass of air and dust.

9) Claim 9
   Claim 9 is the improvement of characteristics of water.

10) Claim 10
   Claim 10 is the invention which removes the bad influence of transfer of the invented machine which is equipped on the vehicle or shipe.

11) Claim 11
   Claim 11 is that claim 2 is used in the water power station.

Claim 11 dose not consume water.

12) Claim 12
   Claim 12 uses atmospheric pressure in the transfer of fluid.

13) Claim 13
   Claim 13 is the invention of blade or wings which have the balance flow curved surface.

### [Effect of invention]

The 2nd science which this inventor create 1990~2004 has the constructions, compositions and functions of SCP, UFES, NFF, FTRP, SQF, BFE, CAC, MFH, 3DUG, UGP et cetera, and explains all things of universe simply, unconditionally and uniformly , and makes new theory and new technique.

The existing 1st science which is the mathematic analysis of observation results can not analyze the invisible parts of universe. Namely, the 1st science is the science of the invisible parts of universe.

Mathematics can calculate unbalance energy which can be experimented, but can not calculate balance energy which keeps 3 dimensions balance and can not be experimented. Therefore, in the 1 st science, experimental expression which is used in the visible range is very effective and has improved and developed the human society.

This inventor has found out the method which can analyze the invisible parts of universe. The reason which can analyze the invisible parts of universe is that the universe is very simple, unconditional and uniform. This inventor hypothesize that SCP fills up in the universe, and SCP constitutes the universal fundamental energy source, and SCP constitutes all matters, all energy and all phenomena of universe. This inventor has confirmed that these hypotheses can explain all things of universe, and can make new theory and new technique.

In the process which create the 2nd science, the work volume which find out and complete the abovementioned SCP, UFES, NFF et cetera becomes mammoth volume, and the treatment of this volume seems almost impossible, the reason which this inventor could complete this work is that the universe is simple, unconditional and uniform. In the process of large progress and development, there are obstacle and difficulty. In this time, human society has many troubles, in the process of progress and development of human society, there are many obstacle and difficulty. Human society must remove the many obstacle and difficulty.

Because human society is one part of universe, human society must understand and popularize the abovementioned natural law principle'. In order to improve and develop human society, it is necessary that the human society understand the reason, necessity and effect. The creation of the 2nd science and the 2nd class permanent motion are splendid opportunity,

This inventor will make effort to develop the 2nd science and the 2nd class permanent motion to desirable direction.

In order to accomplish explain responsibility, this inventor explain ' natural law principle' for human society.

This inventor think that human society is one part of universe.

The history of human society is important material.

In order to create desirable human society, it is necessary to tide over the past.

Proverb: Tide over the past, create the new way.

Both strong and weak must keep ' independence of the 2nd class permanent motion' and ' providence of coexist-fusion'.

'perfect division of work, perfect conference of work, 0 struggle rule' is important.

In the natural field, animal, bird, plant, insect make effort to keep the rule of 0357.

The living and consumption of human society must keep harmony with the earth.

Globalization with competition principle must change to the globalization with 'perfect division of work, perfect conference of work, 0 struggle rule'.

In the universe, there are the each group rule 'independence of the 2nd class permanent motion,' and the whole group rule 'principle of coexist-fusion'. All phenomena stand on its own legs and keep coexist-fusion.

Human society must have and keep the abovementioned 2 rules.

Human society must divide all countries by the necessary conditions, and must make the each group rule and the whole group rule.

Each group rule (independence of the 2nd class permanent motion) Each group must make each group rule which contains endeavor aim and must fit coexist-fusion.

Whole group rule (principle of coexist-fusion)
Human society must understand and use the proverb 'tide over the past, create the new way.

Effect of rule
Rule exist
There is no problem in human society.

Rule not exist
There are many problems in human society.

In this time, there is no rule.

Human society must remove the origin of terrorism. This inventor do not know this origin.

In the human society, there is only one rule 'competition principle'

Reference: this column (6), (9).
Valuation of globalization:
Valuation is as following.

Present globalization has no rule.

In order to amend present globalization, this inventor looks again globalization.

Present globalization is drove by 'free competition principle'.

Western culture has some trouble, but understand 'free competition' and has some countermeasure.

Other cultures are troubled by over competition, and have no countermeasure.

Human society must make the strong countermeasure, and must 'tide over the past, create the new way'.

The strong countermeasure is the change of way of thinking, and the effects of this invention, and the 2nd generation innovation of human society :

This 2nd generation innovation which is supported by the 2nd class permanent motion and the 2nd science is only one chance.

This inventor shows the effect of this invention and the 2nd generation innovation which makes human society be rich, peaceful and happy in (1)~(14) of this column and will complete them in own life.

Fundamental effect (Establishment of rich, peace, happy spiral)
Preparation:
As shown in (7), (8), (11), (12), the preparations are carried out.
Effect:
(2) and following are carried out, and make human society is rich, peaceful happy, and not struggle.

The 1st effect (electric power industry, communication industry, social welfare)
With the practice of (7), (8), (11), (12), electric power industry uses this invention and the 2nd science, solves the problems of resources exhaust, of environment, of earth warmth.

The electric power industry and the relation industry can become to be the fundamental industry, and must enforce the social welfare.

Because there is no competition in the public industry, electric power industry must enforce economic service and social service.

The communication industry which services wide range public communication must enforce economic service and social service too. In Japan, communication industry must be reorganization.

The communication industry must improve by the 2nd science.

In the present competition, a loser can not rise again.

The 2nd effect (metal, engine, ship, motorcar industry)
These industries have the big competitive power.

'Independence of the 2nd class permanent motion' and 'principle of coexist-fusion' must be applied.

The 3rd effect (agriculture, fruit, forestry, fisher, livestock industry)
These industry will be improved by the 2nd science and the 2nd class permanent motion. ' Independence of the 2nd class permanent motion' and' principle of coexist-fusion' must be applied.

The 4th effect (every kind of industry)

'Perfect division of work, perfect conference of work, 0 struggle rule', ' independence of the 2nd class permanent motion' and 'principle of coexist-fusion' must be applied in the whole industries. This is the fundamental conditions which keep the human society to be rich, peaceful and happy.

In all kind of matters of human society, the abovementioned 3 rule must be applied.

The 5th effect: Assistance to the develop country (Establishment of develop spiral)
There is SCP which fills up the universe, the present universe naturally has been formed and continues the present situation forever. In the develop country, there are the effective rules which make and keep rich, peacefulness and happy of the develop country, these effective rule are the following. 'Perfect division of work, perfect conference of work, 0 struggle rule', 'independence of the 2nd class permanent motion' and' principle of coexist-fusion' must be applied in all over the world. It is necessary that both advanced countries and develop countries must understand and practice the abovementioned 3 rules. Under these 3 rules, develop countries make the original own plan of develop spiral, and advanced countries complete the practical plan by this invention and the 2nd science.

1) The 1 st stage:
   Existence of terrorism and trouble obstruct the assistance of advanced country.

Develop country which makes the original own plan of develop spiral must exclude terrorism and trouble and keeps public peace.

The leader of the develop country must make the develop spiral which the people can understand and practice.

The develop country in which there is no terrorism and trouble, and public peace is kept has priority over others.

2) The 2nd stage:
   Both the develop country and the advanced countries apply the abovementioned 3 rules and amend the plan of develop spiral.

The 3rd stage:
The works of which the advanced countries take charge are completed.

The advanced countries explain (a)equipment, (b)technique, (c)skill, (d)money plan to the develop country.

The develop country try to practice 0402.

The results are amended.

Repeat.

The country which promotes the trouble of the other country cannot be assisted.

4) The 4th stage:
   The following (7), (8) are practiced and the conditions of independence and coexist-fusion shall be established.

Judgment standard which is fair and equality:
In order that the human society will be rich, peaceful and happy, the new fundamental law of human society 'natural law principle' must be formed by the fundamental natural 3 laws in the universe 'perfect division of work, perfect conference of work, 0 struggle rule', 'independence of the 2nd class permanent motion', 'principle of coexist-fusion'.

Human society must understand and practice the proverb 'Tide over the past, create the new way.

Explanation of 'independence of the 2nd class permanent motion':
In the universe, SCP (smallest complex particle) is filled up the universe, and SCP has constituted UFES (universal fundamental energy source), UFES has constituted the all things of universe as the 2nd class permanent motion. UFES exists and works at the every position in the universe independently and separately. One 2nd class permanent motion is formed by only UFES in the range in which the 2nd class permanent motion exists and works. The extra energy works to the 2nd class permanent motion, that permanent motion is lost the boundary condition and is extinguished. The abovementioned is ' independence of the 2nd class permanent motion'.

This is the 1 st condition of the success of globalization.

Explanation of 'principle of coexist-fusion':
Because UFES keeps 3 dimensions balance, UFES can works as energy source but can not move the mass by oneself. Because the usual force has 1 dimension force, the usual force can move the mass by oneself, but can not works as energy source, therefore, UFES and the usual force must work by coexist-fusion. This is the 2nd condition of the success of globalization.

In the case that the human society makes and uses (8) the crossing wide range globalization and the classed globalization, the human society mast understand and practice 'natural law principle', namely, the proverb' 'Tide over the past, create the new way ' and the abovementioned 3 rules.

This inventor proposes and practices the next (1) ~ (5).

Popularization of the new vision of the new energy, new universe, SCP and UFES:
This popularization changes the existing vision of the energy and universe et cetera to the new vision. This change is effectual to exchange of the standard of common sense, culture, value, human life, virtue.

Popularization of the 2nd science and the new standard of common sense, culture, value, human life, virtue:
This inventor makes and announces the popularization materials.

Interchange of the other culture:

This inventor made the materials of cultures.

The materials of culture are suspended.

The moral rule to the export and import:
Human society must make and use the moral rule to the export and import in conformity with 'principle of natural law '. This moral rule is the condition which is necessary to the globalization shown in (8).

This is one of the most important things.

Human society must submit the moral rule.

In the human society of the 21 st century, the big reform will occur.

Common rule of human society:
Common rule is 'get on very well with neighbors, do not trouble to others, try to be useful to other'. This is heard in childhood.

This is the fundamental rule.

Fundamental plan and practice of globalization:
Fundamental plan and practice of globalization must be formed by ' principle of natural law'.

This inventor proposes fundamental plan and practice of globalization. The countries which do not agree fundamental plan and practice have not the right which uses the 2nd class permanent motion and the 2nd science.

The fundamental plan and practice are the following 1) the crossing wide range globalization, 2) the classify country or district globalization, 3) the new value and moral of export and import, 4) practice.

The crossing wide range globalization:
This globalization is formed to energy resource, keep environment, food resource, forest resource, mineral resource, science-technique.

The order of practice is energy resource, keep environment, food resource, forest resource, mineral resource, science-technique.

Human society must arrange the matching between the crossing wide range globalization and all classify country or district globalization.

The classify country or district globalization:
In the condition in which the wide range globalization fulfils own functions, all classify globalization can be supplied the all matters which can not make by oneself, and make and practice the plan by which raise up the social life level to the desirable level. In this case, the classify globalization must make the plan on the base of domestic requirement.

The reason of the base of domestic requirement is that the 1 st reason is the rule 'independence of the 2nd class permanent motion', and the 2nd reason is the possibility which make the human society has no necessity of struggle, and keep rich, peaceful and happy forever, and remove the difference rich and poor, and remove the cause of terrorism.

The condition in which each country and district is satisfied with the rule' independence of the 2nd class permanent motion, make each country and district has no necessity of struggle, and gain fair and equality in the condition in which there are difference of science, technique, industry, economy, population, climate, area, the lay of the land and personal expenditure.

The each globalized country do not mind other country, and give itself to development, and compensate the shortage of other country by self surplus, and self shortage is compensated by the surplus of other country. 'Independence of the 2nd class permanent motion' is 'independence by each other compensation'.

The abovementioned is 'principle of natural law'.

Globalization must do not mind other country, and must be made on the real abirity.

In the case in which the rebel of classify is to high, the country can not accomplish the responsibility, and in the case in which the aim of development is too high, the real feeling of rich is lost by hard work, and in the case in which the aim of development is too low, does not develop.

Exchange project in which the value and moral of import and export are exchanged from 'competition principle' to 'independence of the 2nd class permanent motion (independence by compensation each other)' and 'principle of coexist-fusion (coexist-fusion by confidence each other):

WTO, IMF, GAT understand and practice the 'independence by compensation each other' and 'coexist-fusion by confidence each other'.

In the case in which WTO, IMF, GAT does not act the abovementioned works, the 2nd science and the invention of the 2nd class permanent motion are lost the final effect.

Value and moral of present import and export:
Value and moral of present import and export are that the cheaper article is exported and cheaper article is imported, the price is made cheaper endless. This situation is far from 'independence by compensation each other' and 'coexist-fusion by confidence each other'.

In this condition, human society can not become to be rich, peaceful and happy.

The globalization must remove the over competition, destruction of industry and industry caving.

Understanding and practicing of the abovementioned are the conditions which get the license of this invention and the 2nd class permanent motion.

Investment must understand and practice abovementioned.

Value and moral of new import and export:
Value and moral of new import and export are that the articles which the importing country has not or wants are exported, and the articles which the importing country has not or wants are imported.

The effects of value and moral of new import and export are that the over competition is lost, and the destruction and caving of industry are prevented, and base of industry is respected.

Fundamental plan:
1.Globalization of energy resource:
   This globalization must contain all energy resource.

The beginnings of use of this invention are that in the early field after 2~3 years, in the average field after 5~6 years, in the late field after 10 years. This globalization must start in 1~2 years.

Therefore, Japan must make the fundamental plan in one year.

Because the 2nd science can create many new technique, the globalization which make human society become to be rich, peaceful and happy is possible.

The 2nd science will create the new inventions which use the petroleum, therefore, the petroleum resource is important.

Globalization of food resource:
(a)Present situation of the world and countermeasure:
   a) Present situation:
   Unknown.

b)Countermeasure:
   Collection of data.

Fundamental plan:
At first, making the fundamental plan which rises up and keep 100 Percent over self support ratio of food in Japan, and second, the results in Japan will be the fundamental data of the world.

Fundamental techniques:
Quality improve, production increase technique by this invention and the 2nd science:
   Synthesize food by the 2nd science:
      Abovementioned techniques will be able to increase the self support ratio of food to 100 percent over.

practice:
Fundamental study:
   Practical study:
      Mass production:

For example, in (4) of column 'effect of invention', abovementioned c will be confirmed, and c is used in (6).of column ' effect of invention'.

Planning:
Globalization of food resource will be planning.

Making the food supply system:

Making the food supply system to the hunger region.

Money, price, transport of e and f must be arranged.

0458 c mass production is practiced in hanger religion.

Combination of agriculture, fruit, farming, fishing in hanger religion:

Storage of food.

(b) Present situation and countermeasure of Japan:
   a) Present situation:
      Change of whole food resource is necessary.

Synthesized food by the 2nd science is necessary.

The 2nd science must practice the following, the 1 st is that the quality rise up, the 2nd is that the cost down, the 3rd is that the production rise up, the 4th is that the study of synthesized food must start.

International rules about food resource which oppose 'principle of natural law' must be abolished.

b) Countermeasure :
   This countermeasure is explained about Japan, but this is common countermeasure of all countries. This countermeasure is the international rule which makes every food resources of every countries are able to be independence.

The aim is establishment of 'independence of the 2nd class permanent motion in food resource.

Globalization of food resource in Japan:
It is difficult that the food resource in Japan completes the aim by oneself. It is necessary in Japan that the every industries in Japan establish' independence of the 2nd class permanent motion', and are rich, peaceful and happy.

Necessary action:
Necessary action of the all people of Japan is that the all people understand 'independence of the 2nd class permanent motion', and make every efforts to establish the aim.

c. Necessary action must spread in world.

Necessary condition:
Necessary condition is that the value and moral of new export and import are understood and popularized.

Globalization of every industries:
Necessary condition is that the value and moral of new export and import are understood and popularized. Tide over the past, create the new way.

(9) The 6th effect : Solution of historical struggle (Establishment of peace happy spiral) :
   Tide over the past, create the new way. Establish peace happy spiral.

All things practice through United Nation.

Premise condition:
The 2nd science and the 2nd class permanent motion will supply the equipments and techniques which establish 'peace happy spiral'. And by necessary efforts, the people become to be peaceful and happy, and need not struggle.
Dissolution of struggle:
   Reduction of request:
      Reduce the requests to only the necessary condition to keep the peace happy spiral.
      Tide over the past, create the new way.
      Establish peace happy spiral.

Principle of natural law:
The people realize the effects of 'principle of natural law ', therefore, the people can understand and practice 'principle of natural law'.

Practice of 'principle of natural law:
The people will fuse 'principle of natural law' in own life.

Globalization:
The people will find out 'coexist-fusion' and peace happy spiral by globalization.

In the existing globalization, the relation between countries is the competition, but in the new globalization, the relation between countries is the ' coexist-fusion'.

Human society and earth become to be rich, peaceful and happy by globalization.

The 7th effect:
Extinction of typhoon and tornado:

Explanation of typhoon and tornado by the 2nd science will be able to extinguish typhoon and tornado in the early process of occurrence.

There are 2 kinds of tornado, one is able to be extinguished, but other is unable to be extinguished.

The necessary energy is calculated.

(11) The 8th effect: Reset from the 1 st science to the 2nd science:
   The 1 st science is the science of visible parts of universe, and the 2nd science is the science of visible parts and invisible parts of universe. The 2nd science has the method which is able to analyze the invisible parts of universe. The results of analysis of the invisible parts in the 2nd science are the abovementioned SCP, UFES, NFF, FTRP, SQF, BFE, CAC, MFH, 3DUG, UGP and fundamental natural laws et cetera. This inventor has spent the preparation term 52 years and study term 16 years to analyze the abovementioned results. This inventor has analyzed hydrodynamics, cosmic philosophy and elemental particle physics. This inventor has many experiences and uses the abovementioned many universal element under the many experiences. Scientist and engineer must reset from the 1 st science to the 2nd science, and must make effort to practice. Scientist and engineer can not use the 2nd science without experience.

The method which confirms that the laws of the 2nd science is right is that, at 1 st, the law can explain all things of universe, at 2nd, the law can make new theory and new technique

Human society must prohibit the 2nd science studying of fixed specified range.

(12) The 9th effect: Reset from the 1 st technique to the 2nd technique:

The 1 st technique starts from experiment, the 2nd technique starts from natural law by the abovementioned many universe elements. In the 2nd technique, all laws be found out before experiment.

In the case of reset, the 2nd technique must have many experience, in the case which has many experience, the 2nd technique can complete every studies without experiment.

Human society must prohibit the 2nd technique studying of fixed specified range.

(13) The 2nd generation innovation of human society:

The existing globalization is the globalization of competition. In the 2nd generation innovation of human society, the existing globalization must be changed to the globalization of 'coexist-fusion'.

In the existing globalization of competition, all parts of human society lost margin, and any one once became failure, can not rally.

In the existing globalization of competition, profits generates only by the loss of others.

The existing globalization of competition is wrong.

The existing globalization of competition must change to the new globalization of 'coexist-fusion'.

Human society which is one part of universe must understand and practice 3 fundamental laws, as abovementioned.

The present situation of human society shows that the present globalization is wrong.

The rules of globalization must be same as the natural laws.

This invention is based on 3 fundamental laws, namely, 'perfect division of work, perfect conference of work, 0 struggle rule' ,'independence of the 2nd class permanent motion' and 'principle of coexist-fusion', therefore, licensee must understand and practice 'principle of natural law'.

It is necessary that the information medium must inform the real state.

The information medium must have series program of social condition.

Human society needs social condition of globalization.

Statistic data must be informed.

Globalization of energy resource and food resource et cetera must be informed by TV.

Explanation of the 2nd science must be informed by TV.

Explanation of universe must be informed by TV.

Explanation of SCP must be informed by TV.

Explanation of the 2nd class permanent motion must be informed by TV.

Explanation of Newton's law of motion must be informed by TV.

Explanation of Einstein's general principle of relativity must be informed by TV.

As the present countermeasure, (A) Finance countermeasure, (B) The 2nd generation innovation are proposed.

In both (A) and (B), there are the countermeasure for the smaller enterprises.

Finance countermeasure:
In the case of the smaller enterprises, within a certain period of time, act subrogation of interest.

The 2nd generation innovation:
This innovation is that the effects of this invention and the 2nd science practice (1)~(14).

The globalization make the effects of this invention and the 2nd science bring ability into full play, and the period from the start of the plan to the beginning of getting profit is the certain period of time.

(B) is informed by TV.

(14) Summary:
   By (1)~(14), human society need not struggle, and become to be rich, peaceful and happy.

Human society must make (7), (8), (11), (12) go ahead, and must change the fundamental principle 'globalization of competition' to 'principle of natural law', and must practice (1)~(14).

Human society must change competition to coexist-fusion.

In order to realize 'coexist-fusion', it is necessary the whole human society must understand and practice.

Coexist-fusion will make human society become be rich, peaceful and happy.

Independence of classified globalization realize coexist-fusion.

Human society must focus all efforts on 'independence of the 2nd class permanent motion'.

Establishment of independence of classified globalization make the possibility which realize coexist-fusion.

This inventor use the 2nd science and the 2nd class permanent motion, establish the independence of classified globalization, and establish rich, peaceful and happy of the whole globalization.

This inventor hopes that the all people understand and practice the independence of classified globalization and coexist-fusion.

### Best form to practice the invention]

Explanation is as following.

This invention is based on the 2nd science which is the science of the invisible parts and the visible parts of universe. The existing 1 st science is the science of the visible parts of universe. The 2nd science found out the next following from the invisible parts of universe.

The next following is that the abovementioned universe elements SCP, UFES, NFF, FTRP, SQF, BFE, CAC, MFH, 3DUG, UGP, some fundamental laws et cetera. This invention uses all these universe elements and laws, therefore, in order to understand and use this invention, it is necessary to understand all these universe elements and laws.

This is impossible in short time. Therefore, this explanation uses the amended Newton's law of motion, law of inertia and law of action-reaction.

In Newton's law, there is only visible parts in universe, in this explanation, invisible parts are supplemented to Newton's laws.

In the 2nd science, SCP (smallest complex particle) fills up universe, and constitutes all things of universe. UFES (universal fundamental energy source) which is constituted by SCP is the fundamental energy source of universe and generates SQF (strain quantity of field) in proportion to the velocity of mass and supply SQF to moving mass as motion energy.

All Newton's laws are supplied SQF as energy from UFES, namely, all things of universe are the 2nd class permanent motion, and, in moving mass, there are 2 energy that one is the formal energy another is inertia energy.

Inertia energy acts only in starting period, and in stopping period and in action-reaction period, because in constant velocity the inertia energy doe not act.

Namely, in constant velocity motion, there are two same energy in the moving mass. This invention is the usage of inertia energy in constant velocity.

In the artificial phenomena, because there are artificial force and not permanent motion, the inertia energy is not necessary. But, in the natural phenomena, all things of universe are the 2nd class permanent motion, therefore, the inertia energy is necessary.

In the universe, in order to constitute the 2nd class permanent motion, it is necessary that the all universe elements keep 3 dimensions balance. In the natural phenomena, all 3 dimensions balance is satisfied naturally. But, in the artificial phenomena, 3 dimensions balance is very difficult, 100 percent satisfaction is necessary.
99 percent is same as 0 percent, therefore, experiment can not study the boundary condition. It is necessary that the boundary conditions are found out by only the theory study of the 2nd science.

Whole construction:

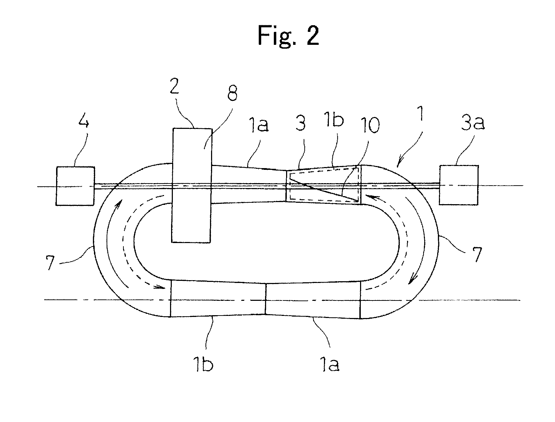

Figure 2 is whole construction. 1 is circular tube whose inside diameter is about 51mm, 1a is reducing part, 1b is expanding part, 2 is fluid hold-supply means, 7 is curve part.

3 is flow quantity generate means. 3a is motor(100V, 150W, condenser motor) 4 is electric generator(AC, 100V, 450W). Motor 3a, flow quantity generate means 3 and electric generator 4 are connected by one axis. Flow quantity generate means 3 combines watermill. And in 3, there are the formal energy and inertia energy (attend overlap energy). Formal energy generates and keeps flow quantity, inertia energy drives 4 and makes electric generator 4 generate out put. The long diameter of 1 is about 60cm, short diameter is about 30 cm.
(2) Explanation of parts:
   1) Boundary condition of circular tube 1:
      1. Condition of UFES and UGP (universal gravitation pressure):
         In circular tube 1, UFES and UGP keep 3 dimensions balance. Fluid flow can become BFE(balance flow energy).

2. Condition of FTRP (flow track recovering phenomena):
   Every flow quantity pass through each cross sectional area in unit time are all same.

3. Condition of Flow quantity generate means 3:
   3 generates fluid flow as same as the flow which is generated by UFES. This condition makes this invention become as same as the natural phenomena by UFES.

4. Condition of CAC (complex acceleration coordinate):
   Fluid flow of this invention is as same as the fluid flow by UFES, and is the 2nd class permanent motion.

In experiment, the completeness of the 2nd class permanent motion is very difficult, but finding out the universe elements are easy. The abovementioned universe elements found out by short terms study. Universe elements act own function unconditionally.

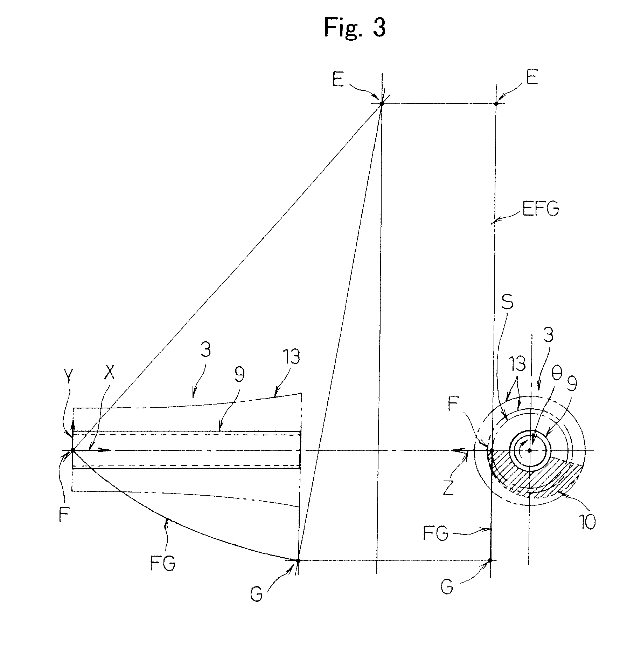

Figure of reducing part 1 a and expanding part 1b does not shown in figure2, but have special figure shown figure 3 and explanation of flow quantity generate means 3.

Explanation of fluid hold-supply means 2:
Fluid hold-supply means 3 supply UFES and UGP in circular tube 1. Because these elements are fundamental elements, the free degree of means 3 are large.

Means 3 is made by plastic plate, height is 40 cm, length is 5 cm, width is 20 cm, thickness is 1.5cm.

Explanation of flow quantity generate means 3:
Means 3 is set freely in reducing part 1 a and expanding part 1 b.

Means 3 can be used in water, air, steam, burnt gas, in all case, necessary boundary condition is that the flow mass which pass through each cross sectional area in unit time are all same.

As shown in figure 3, means 3 is axially flow type, blade 10 is formed by the balance flow curved surface which is based on circle. In the case of circle, water 8 in means 3, in every position, without fail, flows by the combination of circle motion, without fail, acceleration and deceleration occur.

In figure 3, E is imagined center, EFG is imagined plate, S is imagined column.

Angle and diameter of blade 10 of means 3 are designed by the condition 0555. And the water 8 flows perpendicularly to blade 10, and flows in one body with means 3. In this case, water 8 flows by FTRP, this condition is same as the natural water flow. In means 3, there are formal energy and inertia energy, and there is the 2nd class permanent motion.

Formal energy is generated by means 3, inertia energy is generated by the figure of circle tube. Therefore, the design of blade 10 and the circle tube 10 must realize that the formal energy and the inertia energy are same.

The pressure which works to blade10 is 'atmospheric pressure +water pressure + dynamic pressure'. Therefore, the inertia energy is the work load of the pressure.

Design of expanding part 1 b and means 3:
Expanding part 1b:
   Length of combination of reducing part 1a and expanding part 1b is 240mm, maximum diameter is 51 mm,minimum diameter is 42mm.

Mass flow quantity is 1.5 kg per sec by 3200rpm.

Inclination angle at upper end 13 ° 7', lower end 7 ° 24'.

By arrangement of diameter at each cross sectional area, flow quantity of each sectional area become same.

Manufacturing of means 3, 1a, 1b:

Assembly:

Boundary condition:

Necessary condition:
Flow quantity of each sectional area are all same.

All energy source:

Necessary energy source:
UFES, UGP

Artificial energy:
Flow quantity generate means

5 . Natural energy :
   UGP

5) Confirmation of function:
   1. Flow quantity generation means:
      This means makes artificial fluid flow become as same as the natural flow.

2. Balance flow curved surface:
   This surface makes fluid flow by the same mechanism as universal gravitation.

UFES:
UFES acts same function in artificial phenomena and natural phenomena.

UGP:
UGP acts same function in artificial phenomena and natural phenomena.

FTRF:
FTRP acts same function in artificial phenomena and natural phenomena.

CAC
CAC acts same function in artificial phenomena and in natural phenomena.

Actual results of practice form:

RPM:
3200rpm

Flow quantity:
1.5kg per sec

3. Necessary artificial energy:
   Axial energy of water +no load loss of generator = 1 5 0 W

4 . The energy which means 3 supplies to generator 4:
This energy (W)=1.027x( circular pressure per unit area of blade 10:kg) ×(circular area blade10: cm)x(rotation act radius of blade 10:cm )× ( rpm )÷100=about1200W

5. Work of 450 W generator:
Input is 1200W, no-load loss is 80W, effective input is 1120 W , output is 450 W.

6. Calculation results:

| | |
|---|---|
| Inside diameter | calculate results |
| 5 cm | 0.9kW |
| 20cm~50cm | 200kW~10000kW |
| 1m~2m | 200000kW~1800000kW |

Effect:
Effects are shown in Column of effect invention.
This invention makes human society become to be rich, peaceful and happy.

The 2nd science can explain all universe.
Possibility of usage of industry]

This invention can practice the 2nd class permanent motion.
This invention makes all fluid machine become the 2nd class permanent machine.

### [Explanation of figure]

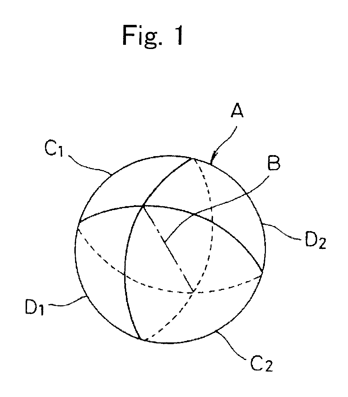

[Figure 1] This is the figure which shows construction and composition of smallest complex particle.
[Figure 2] This is the figure which shows whole construction of circular type.
[Figure 3] This is the figure which shows flow quantity generate means composite watermill or air mill.

### [Explanation of mark]

- A: smallest complex particle
- B: line symmetry axis
- C1,: C2 mass element
- D1: plus electric element
- D2: minus electric element
- S: imagine column
- E: imagine center of imagine circle
- FG: imagine circular arc
- EFG: imagine plate
- 1: circular tube
- 1a: reducing part
- 1 b: expanding part
Fluid hold supply means
Flow quantity generate means
- 3a: motor
generator
- 7,7: curve
- 8: water
- 9: axis
- 10: blade
- 13: out line

## Claims

1. Man who made the proverb 'Next grass seems more beautiful' is unable to escape from his own inclination which decides the value of all things on his own recognition, evaluation, consideration, understanding with relativity. Therefore, man evaluates himself in comparison with others. Under the tendency of the above mentions, the existing 1 st generation natural science (after, written, the 1st science) which must be objective and absolute is influenced heavily by the principle of relativity.
To the contrary, I have objectively and absolutely imagined, considered, understood and constructed all conditions which have kept the permanent stability of the universe. In other words, my contrary study, namely, my objective and absolute study is the study whose basis is the whole universe only. In the results of my those contrary studies, I have found out the new marvelous conclusion that the universe is filled up by the smallest complex particle(after, written, SCP), and is filled up with the universal fundamental energy source(after, written, UFES) which is formed by SCP, and SCP forms all matters, energy and phenomena of universe, and each matter don't have direct relation with other matters, and relates other matters through the field of UFES, and is supplied with necessary energy from UFES, and gets and keeps its own condition depend upon the principle of absoluteness.
If each condition of each matter is decided on many kinds of relativities to the other matters, the condition of the universe is unable to select and keep its own stable state.
In the results that I am looking back upon my life from elementary schoolboy age to the present time for about 70 years, I have been studying for 70years all matters of universe which contain the steel balls falling and colliding play, the building blocks sliding game on the slide and the water flowing play in my garden of my childhood age. In this process, I could train my sensibility, consider ability, understand ability and organize ability, and my principle of absoluteness has been marvelously improving for 70 years.
In my principle of absoluteness, the universe is filled up with the smallest complex particle (after, written, SCP) which is invisible. SCP composes ( 8 + α ) kinds of the universal fundamental energy sources (after, written, UFES) which are invisible and (5 + β) kinds of the nuclear fused forces (after, written, NFF) which are invisible.
SCP, UFES and NFF independently exist and work at the every location of the universe, and I have found out many fundamental hypotheses (after, written, MFH) which are explained by the principle of absoluteness. And SCP, UFES, NFF and MFH can explain the almost all of the universe, but SCP, UFES, NFF and MFH are unable to create the 2nd class permanently working machine until 2004 year.
Recently ( at 2004 year), I have found out the complex acceleration coordinates (after, written, CAC)and created my early principle of absoluteness(this becomes the 2nd generation natural science after, written, the 2nd science) in which all matters of the universe are working based on CAC which is the combination of a acceleration coordinates and a rotation coordinates.
All matters based on CAC are able to be supplied with necessary energy as the strain quantity of the field of UFES ( after, written, SQF) from the abovementioned UFES, and are working as the 2nd kind of permanent motion. Therefore I have realized the 2nd science and the 2nd class permanently working machine.
CAC is able to constitute the universe and the principle of absoluteness of the universe unconditionally and easily.
The 2nd class permanent motion and this invention are realized on SCP, UFES, NFF, SQF, CAC and MFH.
Claim 1 is the invention of the artificial 2nd class permanent motion which is unable to be explained within the limits of the 1st science and the existing common sense. And claim 1 is realized by the natural laws of SCP, UFES, NFF, SQF, CAC and MFH which are based on the 2nd science but does not be observed directly. Therefore, the 1 st science, the existing experience and knowledge which are based on observation of phenomena are unable to explain claim 1, because claim 1 is based on the balance flow energy (after, written, BFE) but the 1 st science and the existing experience are based on the unbalance flow energy.
The 1 st science has made great progress, and has gotten high reputation, but the 1st science omits SCP, UFES, NFF, SQF, CAC and MFH which do not be observed directly.
In order to aid a person in understanding, and to serve popularization, I write in the beginning of this specification the difference between this invention and the 1st science, because this specification has very many necessary items and very many pages, and it takes too much time to understand these whole sentences. In order to understand the 2nd science, it is necessary to understand the omissions of the 1 st science and the correctness of the 2nd science.
In the 2nd science which I created in 2004 year, the judging and adopting standard of the new natural laws are both the confirmation of the systematization in which all matters of the universe are systematically explained by the new natural laws, and the confirmation of wide utility of the new natural laws. The 2nd science is based on the model of universe, SCP, UFES, NFF, CAC, BFE, SQF and MFH.
The model of universe, SCP, UFES, NFF, CAC, BFE, SQF and MFH are able to realize this invention and to explain the all natural phenomena which include the new observations of natural phenomena announced in all media TV, papers and magazines, and the many phenomena that the 1 st science can not explain or has the misunderstanding.
The model of universe, SCP, UFES, NFF, CAC, BFE, SQF and MFH are able to explain the whole universe, and to construct the 2nd class permanent motion, and to confirm the truthfulness of the 2nd Science, and to construct the natural phenomena and the artificial phenomena in wide range. But, the truthfulness of the 2nd science is unable to be explained to another person based on visible evidence, because the 2nd science does not have any visible evidence of which the 1 st science approves. The abovementioned trouble is based on the fact that the 1 st science is the unbalance energy science and the 2nd science is the balance energy science.
These invisible evidences are approved by only the 2nd science, and the model of universe, SCP, UFES, NFF, CAC, BFE, SQF and MFH support mutually in the 2nd science.
The abovementioned trouble is based on the fact that the 1 st science is the unbalance energy science and the 2nd science is the balance energy science. In detail, in the 1 st science there is only the unbalance energy without the correct theory, and in the 2nd science there is the balance energy with the correct theory.
I have constructed the 2nd science based on the follows.
I have confirmed the model of universe as the follows. At the beginning I have confirmed that the figure of universe is the ball figure which has the fixed diameter, because ball figure universe is able to utilize the mathematical collapse. And at the center of ball figure universe, SCP are compressed and are fused to atoms, these atoms become to the mammoth mass, and this mammoth mass raises 'BIGBANG at a condition of which the natural actual shrinkage becomes smaller than the mathematical shrinkage. From 1st to 4th BIGBANG construct the universe. 1 st BIGBANG makes a few big fragments, 2nd BIGBANG changes a few big fragments to many small fragments which make the net formation of nebulas of universe. 3rd BIGBANG changes the small fragments to nebulas. 4th BIGBANG is the burst of the supernova. The earth was formed by 3rd BIGBANG.
The space bodies which were made by BIGBANG are flying accelerative from the center to the circumference of universe, because it is necessary to keep the constant flying energy under the condition that the intensity of UFES is larger at the center of universe, and is smaller at the circumference of universe. When the space bodies arrive at outer circumference of the universe which has no SCP in outer side, the space bodies lose NFF, and split to SCP. The spilt SCP returns to the center of universe spending long time.
I have confirmed that SCP is the most fundamental element of universe, and SCP fills up the universe and constitutes all matters, energy and phenomena of universe. The structure, compositions and functions of SCP can constitute the model of universe, UFES, NFF, CAC, BFE, SQF and MFH. In this case, confirmation of the structure, compositions and functions of SCP is very easy, because the universe is constituted simply, necessarily and systematically. The 1st science omits the model of universe, SCP, UFES NFF, CAC, BFE, SQF and MFH which are invisible, and in the universe there are more invisible matters than visible matters, and mathematics can not change invisible to visible, because mathematics can calculate the unbalance energy phenomena, but can not calculate the balance energy phenomena as SCP, UFES,NFF, CAC, BFE, SQF and MFH. Therefore the 1st science is supposing that the universe is very incomprehensible, and the 1st science dose not try to study the universe by brains works without mathematics. I believe that the systematical works of brains without mathematics is the best method in order to study the invisible matters of the universe.
SCP, UFES and NFF have been confirmed relatively easy. But it is very difficult to confirm CAC and MFH which constitute the universe. As the abovementioned, it takes about 70 years from my childhood to the present time to confirm the model of universe, SCP and all.
The motions of space bodies and every motion of every matter of the universe belong to CAC which is the complex of acceleration coordinates and rotation coordinates. The combination of the function of SCP and the function of UFES forms SQF of UFES as the acceleration energy. These phenomena can be explained by CAC. The field of UFES supplies SQF of UFES to the acceleration motion as the acceleration energy.
In the results of my studies, every element of every matter of universe and MFH are formed by the combination of the rotation of SCP, the function of UFES and the function of CAC.
In the natural fluid phenomena, the fluid is flowing by the phenomenon which is recovering the flow track of the flowing fluid (after, written, FTRP, flow track recovering phenomenon), and the fluid flows from the lower courses of the flowing fluid, therefore the energy of the fluid flow which is passing each sectional area of the fluid flow during a unit time is the same energy. And the abovementioned same energy is supplied at the every sectional area from UFES.
Because the field of UFES supplies an acceleration energy to the every accelerated motion, and more the rotation of SCP in the every matter is the rotational acceleration motion, every element of the every matter of the universe is supplied with the acceleration energy from the field of UFES.
Therefore all natural phenomena are the 2nd class permanent motion, because the all natural phenomena with SCP which are rotating are supplied with acceleration energy from the field of UFES.
In the results of my studies, the acceleration coordinates and the rotation coordinates are able to be supplied with acceleration energy from the field of UFES unconditionally and individually.
About only the energy supply, there is no problem about the directions of axes of CAC. But in order to make the 2nd class permanent motion by CAC, at the every location of CAC, it is necessary to arrange the directions of all axes of CAC in the same direction.
In the case of the former artificial phenomena, all axes of CAC have the random direction at every location of CAC, therefore all former artificial phenomena are not the 2nd class permanent motion.
On the contrary, in the case of the artificial phenomena of this invention, all axes of CAC of all elements of the artificial phenomena are arranged in the same direction, therefore the new artificial phenomena of this invention is the 2nd class permanent motion.
Especially, the mass on the rotation coordinates is rotating unconditionally with an acceleration motion of the 2nd class permanent motion, therefore the mass on the rotation coordinates is supplied with energy unconditionally from the field of UFES, and so, the mass on the rotation coordinates is rotating as the 2nd class permanent motion.
In the rotary motion, the mass is rotating, but dose not move to the axial direction, therefore, on the rotation coordinates, there is no relation between the rotary motion and the axial motion, so the rotating SQF of UFES is able to grow up unconditionally the necessary value by the energy supplied from UFES.
In the 2nd class permanent motion machine of this invention, there are the regular SQF of UFES and the complex overlapping SQF of UFES. And the regular SQF makes and keeps the water flow, and the complex overlapping SQF makes and keeps the work which is able to be taken out and to be used.
The 1st science omits SCP, UFES et cetera, therefore, in the 1st science, theory is separated from actualities. And the 1 st science is unable to calculate the balance flow energy of the all natural phenomena, because the 1 st science omits SCP, UFES et cetera, and mathematics which is used in the 1st science is unable to calculate the balance flow energy.
The 2nd science contains SCP, UFES et cetera, therefore, the 2nd science is able to correctly calculate the artificial phenomena of this invention and the all natural phenomena, because, in these cases, all directions of the coordinate axes have the same direction in the every location of the universe. The direction of the locus of fluid flow forms the direction of curved axes of the coordinate
If a scientist of the 1 st science resets himself to the 2nd science, and studies the model of universe, SCP, UFES et cetera, and arranges all directions of the coordinate axes in the same direction, in consequence, the scientist is able to run ahead of the all field of the 2nd science.
Einstein's general principle of relativity is able to calculate only the solid body motion by the universal gravitation, in other words, Einstein's general principle of relativity is an approximate calculation of the universal gravitation and not the general theory.
The general theory must be able to explain the all matters of the universe. And Einstein's principle dose not have a rotation coordinates and misses the studies of the essences of the mathematics, the coordinates, the universe, and the condition of existence in universe.
The all matters, energy and phenomena of the universe are able to be explained by the 2nd science simply, necessarily and systematically, because the all matters, energy and phenomena of universe are made of the same elements, namely, SCP, UFES, NFF, CAC, MFH et cetera.
Therefore, it is necessary that the scientist has understood perfectly the model of universe, SCP, UFES, NFF, CAC, MFH et cetera of the 2nd science, before he begins to use the 2nd science.
In the natural phenomena of the 2nd science, the every energy of all matters and phenomena is the balance flow energy (BFE). In the balance flow energy, it is necessary that all elements of the all energy keep balance condition. In the case whose balance condition is less than 100%, the balance flow energy can not exist, for example, the case of 99% and the case of 0% have the same results.
In the study of the 2nd science, it is necessary that the scientist correctly knows, understands and uses the conditions of all elements of the model of universe, SCP, UFES, NFF, CAC, MFH et cetera of the universe. In the natural phenomena of the universe, the all conditions satisfy naturally their necessary conditions, but in the artificial phenomena, it is necessary that the scientist arranges the all conditions of the artificial phenomena in the correct conditions.
In this case, it is impossible to imagine, consider, understand and use correctly the model of universe, SCP, UFES, NFF, BFE, CAC, SQF, MFH et cetera of the universe in the domain of the 1 st science. But, in 2004 year, the 2nd science completed the model of universe, SCP, UFES et cetera.
After 2004 year, the study of the natural and artificial phenomena becomes easier, because the scientists are able to use the model of the universe, SCP, UFES et cetera, and the studying methods and the experiences of the 2nd science.
Claim 1 of this invention is explained as follows.
This invention dose not been explained by the 1st science, because the 1st science does not know the model of the universe, SCP, UFES et cetera. The cause by which the model of the universe, SCP, UFES et cetera had been fallen off from the 1st science is the defects of functions of mathematics which is used in the 1st science. The mathematics can calculate the unbalance energy which is used in the 1st science and can constitute the artificial phenomena which are based on the unbalance energy, but the mathematics can not calculate the balance energy which is used in the 2nd science and can constitute the natural phenomena which are based on the balance energy. The 1 st science does not know the abovementioned, and does not have the method in order to understand the abovementioned. Therefore, the 1 st science denies the model of the universe, SCP, UFES, et cetera, this invention and the 2nd science.
This invention is based on the 2nd science and is 'The methods and machines which use the 3dimensions universal gravitation (after, written, 3DUG) and the universal gravitation pressure (after, written, UGP) which are formed of SCP filled up the universe'.
The principles and constitutions of every claims of this invention are common in all domain, and the purpose of claim 1 is the following (1).
(1) The purposes of claim 1 are the constitutions and the uses of the artificial 2nd class permanent motion of the artificially flowing fluid:
Claim 1 is the invention which uses the fluid, for example, air or water et cetera, makes and uses the artificial 2nd class permanent motion of the fluid flow. Put it concretely, claim 1 is the method which copies the natural phenomena, and is formed by the combination of the motor, the flow quantity generation means (after, written, FQGM), and the flow route whose sectional area expands or reduces, and is set in the open air or in the open water in which there are 3DUG and UGP. The abovementioned method is able to constitute the 2nd class permanent motion which is supplied with necessary energy from UFES. In the results of the abovementioned functions, claim 1 is able to move the fluid by the higher efficiency, and is able to force the fluid to work by the higher efficiency (the efficiency between an artificial energy and an out put energy is over 100%), and claim 1 has the next constitutions.
1) This invention is the copy of the natural balance flow energy (after, written, BFE) which is the 2nd class permanent motion of the natural fluid phenomena by the universal gravitation, and this invention must use 3DUG and UGP as the pressure component of artificial BFE which is the 2nd class permanent motion:
In whole domain of the method and machine of this invention, and, before, during and after the actions of the method and machine, it is necessary that the atmospheric pressure and water pressure keep always the 3demensions balance, and these pressures travel with the flow of fluid, and the atmospheric pressure and water pressure in the whole domain of method and machine, as like as, a propeller of ship, windmill, exhaust fun keep 3dimensions balance of the fluid flow, and constitute the pressure component of the 2nd class permanent motion of the artificial fluid flow.
2) Claim 1 is based on the studying and understanding of BFE of the natural 2^{nd} class permanent motion of the natural fluid flow which is occurred and maintained by the universal gravitation, and claim 1 has reference to BFE of the natural 2nd class permanent motion of light, electric current and electromagnetic waves, and must have FQGM which is able to make and maintain the artificial BFE which have the same energy of the natural BFE of the natural 2nd class permanent motion of the natural fluid flow which is occurred and maintained by the universal gravitation:
In the universe, the energy of the natural fluid flow is BFE, and the 2nd class permanent motion of the natural fluid flow is made and maintained by the universal gravitation, in this invention, FQGM must make and maintain the artificial flow track recovering phenomena (after, written, FTRP) which is the same phenomena of the natural FTRP which is made and maintained by the universal gravitation.
The structure of FQGM is the axial flow type, and the blades of FQGM are formed themselves into the high dimension curved line as like as a circle, ellipse, hyperbola, parabola or trigonometric function whose gradient increases or decreases continuously. And so the blades of FQGM must have the balance flow curved surfaces which are made by the abovementioned high dimension curved line and make FTRP and make and maintain fluid flow. In this case, the rotation motion of the blade and the flow of fluid independently make SQF of UFES which has the same figure and same magnitude. And the rotation of the blade of FQGM and the flow of fluid make the accelerated flows both in the axial direction and in the rotational direction which is perpendicular to the axis on the every sectional area of the fluid flow.
In this case, the combination of the axial flow and the rotational flow becomes the combination of an acceleration and a deceleration or a deceleration and an acceleration, and more, becomes the constant speed and constant BFE and fixed constant energy as same as the energy which is made by the universal gravitation.
The abovementioned function of FQGM is the basis of this invention.
3) In the combination of FQGM and the flow route, it is necessary that SQF of UFES which is made by the rotation of FQGM is as same as SQF of UFES which is made by the fluid flow in the flow route, and these two same SQF of UFES are working individually in FQGM, and the one SQF makes and maintains the fluid flow and the other SQF takes the charge of the out put energy of generator, and so these two same SQF improves the total efficiency of FQGM.
Claim 1 must keep the gap between FQGM and the flow route as can as smaller, and so it is possible that SQF of UFES which is made and maintained by the rotation of FQGM on every sectional area of FQGM, and SQF of UFES which is made and maintained by the fluid flow in the flow route on every sectional area of the flow route force themselves to be similar at least, and desirably to be the same.
And so it is possible that SQF of UFES which is made and maintained by the rotation of FQGM, and SQF of UFES which is made and maintained by the figure and size of the fluid flow coexist and work simultaneously in the FQGM. And the one SQF makes and maintains the fluid flow and the other SQF takes the charge of the output energy of the generator.
In the result, claim 1 is the invention 'The methods which use 3DUG and UGP of SCP filled up the universe.' And claim 1 is the fundamental invention which selects, combines and uses the model of universe, SCP, UFES, NFF, FTRP, SQF, BFE, CAC and MFH, and uses 3DUG and UGP which are formed by the model of universe, SCP, UFES et cetera in the artificial fluid flow.

2. By the 2nd science, the all natural phenomena are the 2nd class permanent motion which is supplied with the necessary energy from the field of UFES.
Claim 2 copies the natural phenomena and products and uses the 2nd class permanent motion fluid machine.
In order to product and use the 2nd class permanent motion fluid machine and so to get the new energy source, there are 2 fundamental constitutions as the following.
The first, in the case of the fluid passing type, the fluid machine of claim 2 has a motor, FQGM which is used simultaneously as both propeller and water mill or windmill, the flow routes whose sectional areas reduce, or expand, or reduce and expand, and is set up in the open air or in the open water in which there are useful atmospheric pressure and water pressure.
The second, in the case of the fluid circulating type, the fluid machine of claim 2 has a motor, FQGM which is used simultaneously as propeller and water mill or windmill, a generator and the flow route whose sectional areas reduce and expand, a circulate flow route and the fluid hold and supply means.
And then it is necessary to satisfy the following.
1) Setting
There are two setting methods as following.
1. The first, in the case of the fluid passing type, in whole domain of claim 2, it is necessary that the atmospheric pressure and the water pressure which exist and work in the fluid machine have the 3dimensions balance with the atmospheric pressure and the water pressure of the outside of the fluid machine.
It is necessary that the fluid machine is set in the open air or in the open water, in order that the machine is able to use the atmospheric pressure and the water pressure as the pressure component of BFE of the 2nd class permanent motion of air or water.
2. The Second, in the case of the fluid circulating type, in order that the useful atmospheric pressure and water pressure have the balance action to both the inside and the outside of the fluid machine, and the fluid machine is able to use the atmospheric pressure and the water pressure as the pressure component of the BFE of the 2nd class permanent motion of the air or water, it is necessary that the machine is set up in the open air or in the open water, and is airtight or watertight, and is the sealed up circulate type, and the fluid hold and supply means is inserted in the circulate flow route
3. In the setting conditions of above 1 and 2, Newton's law of inertia, law of action and reaction become to be able to function. These conditions are the most important in this invention in order to realize the 2nd class permanent motion of fluid.
2) Flow route
It is necessary to select one from the next two.
1. In the case that the flow route whose both ends are opened is set up in open air or water:
It is necessary that the flow route has the reducing part, or the expanding part, or the reducing and expanding combination part, in order that the useful atmospheric pressure and the air pressure at the every location in the whole domain of claim 2 keep the 3demensions balance, and make the combination of the acceleration and deceleration of the fluid flow by FTRP.
2. In the case of the sealed up circulating type:
Because the function of the useful atmospheric pressure and water pressure acts to the fluid in the fluid machine only from the fluid hold and supply means, it is necessary that the flow route is the circulating flow route which connects from one side of the fluid hold and supply means to the opposite side of the same means.
In order that the fluid flow in the circulating flow route forces itself to flow with combination of acceleration and deceleration by FTRP with the mass setting function and the mass accelerating function, it is necessary that the combination of reducing part and expanding part is set up at the exit of the fluid hold and supply means, and in order to force the flow to circulate, the curved part is inserted, and in order to insert the straight part, the combination of the reducing part and the expanding part is inserted, and in order to change the flow direction, the curved part is inserted, and then the circulating flow route is connected to the opposite side of the fluid hold and supply means and the circulating fluid flows into the inlet of the means.
3) FQGM (flow quantity generation means):
FQGM is constituted as same as the FQGM in the abovementioned 2) of (1).
4) In order to make and use the 2nd class permanent motion fluid machine:
At first, in order that the invention of claim 2 forces the fluid flow to be formed into the complex component of the axial component and the rotational component as same as the complex component of the axial component and the rotational component of BFE of the 2nd class permanent motion of the natural fluid phenomena, and forces FQGM, a motor and a generator to be connected by one axis, and forces the energy mechanism of the whole domain of the fluid machine to be CAC as same as the energy mechanism of BFE of the 2nd class permanent motion of the natural fluid phenomena, and forced FQGM to be set up in the reducing part, or the expanding part, or reducing expanding complex part of the flow route to which the useful atmospheric pressure and the water pressure work directly from the fluid hold and supply means. And then in the every sectional area of FQGM, the figure and size of SQF of UFES which is constituted by the rotation of FQGM must be at least similar to, desirably same to the figure and size of SQF of UFES which is constituted in the every sectional area of FQGM by the fluid flow in the fluid route. And then, the several laws 'the balance flow condition', 'the independency of the 2nd class permanent motion', 'the relativity between the speed of force and the mass' and 'perfectly divided work system perfect conference system no struggle rule' force the abovementioned two SQF of UFES to exist and work together in FQGM, and force the one of the abovementioned SQF to keep the flow quantity of the machine and the rotation of FQGM, and force the other of the SQF to rotate the generator which is loaded. The energy sources of generator driving energy are 3DUG and UGP, in other words, the generator driving energy is the working quantity of the fluid flow by 3DUG and UGP. And the smaller part of the output of the generator drives the motor, and then, the larger part of this output is used freely as the new energy source.
Claim 2 is the invention 'The machine which uses 3DUG and UGP of SCP filled up the universe' realizes the abovementioned 2nd class permanent motion fluid machine.
( notes : This invention is unable to be understood and used by the 1 st science which omits SCP, UFES, SQF, BFE, CAC, FTRP, FQGM, 3DUG, UGP and the abovementioned several laws of the 2nd science et cetera. In order to understand and use this invention, it is necessary to understand and use the 2nd science. )

3. Claim 3 is the invention of the production and use of FQGM which makes the 2nd class permanent motion fluid flow in the flow route. The coordinates of this fluid flow is CAC which is the complex coordinates of acceleration coordinates and the rotation coordinates, and this CAC fluid flow is the 2nd class permanent motion of BFE, and has the axial acceleration component and the rotation component which is perpendicular to the axis of the fluid flow.
This FQGM which is used in this invention is the axial flow type, and the blades of FQGM are formed by the balance flow curved surface which is formed by the high dimensions curved line which is similar to a circle, ellipse, hyperbola, parabola and trigonometric function.
Those blades make and maintain FTRP with the mass location setting function and the acceleration function which are similar to the function of the universal gravitation. And the rotation of blades makes, maintains, propagates and practices the axial acceleration motion and the rotational motion which is perpendicular to the axis.
Claim 3 is the invention 'The machine which uses 3DUG and UGP of SCP filled up the universe' realizes the abovementioned FQGM and the fluid machine with this FQGM.

4. In the case of the fluid machine which has no expansion function and no compression function, or in the case of the fluid machine in which the gas or vapor is used without expansion or compression, still more in the case of the fluid machine in which there is a combination of FQGM and the reducing or expanding part of the flow route, for example, in the case of the propeller of ship and so, in order to use the phenomenon in which the plural SQF of UFES occur, exist together and act simultaneously in the same location, it is necessary that the gap between FQGM and the flow route is kept as small as possible, FQGM must be the axial flow type, the blades of FQGM is made by the balance flow curved surface, the inclination angle of the blades changes successively, moreover, ( the axial speed of the fluid flow which is based on the combination of the average rotational speed on the each sectional surface of FQGM and the tangent value of the inclination angle at the average rotational speed position of the blades )×(the each sectional area of FQGM) = the flow quantity passing through the each sectional area of FQGM in a unit time must be the constant value, in the results of the abovementioned, the flow quantity and the figure and size of SQF of UFES which are made by the rotation of FQGM, and the flow quantity and the figure and size of SQF of UFES which are made by the fluid flow in the flow route are at least similar, desirably same, and in this condition, those two flow quantities and those two figures and sizes are able to exist together and practice simultaneously at the every sectional area of FQGM, and this coexistence advances the output and efficiency of the fluid machine.
Claim 4 is the invention 'The machine which uses 3DUG and UGP of SCP filled up the universe' which is the large output and high efficiency fluid machine as the propeller of ship or the exhaust fun and so which has the combination of FQGM and the reducing or expanding part of the flow route, and uses 3DUG and UGP of SCP.

5. In the case of the turbine machine in which the turbine is formed as FQGM, and a combustion gas or steam forces the turbine to rotate, in order to use the natural phenomena in which the mass of the fluid works as the energy originate catalyst, energy function medium and energy propagation medium of BFE of fluid flow:
(1) It is necessary that the turbine is the axial flow type, the blades of the turbine are formed by the balance flow curved surface, the sectional area of flow route expands in proportion to the expansion of the gas, the inclination angle increases in proportion to the expansion of the gas, and in the every sectional area of the turbine, ( the axial average speed of the fluid flow which is based on the combination of the average rotational speed on the each sectional surface of the turbine and the tangent value of the inclination angle of the blades at the average rotational speed position of the blades)×( the each sectional area of the turbine )×( the correction factor of the expansion of the gas)= the flow quantity passing through the each sectional area of the turbine in a unit time must keep the constant value, in the results of the abovementioned, the flow mass of fluid flow which is keeping 3dimensions balance and passing through the each sectional area of the turbine by the expansion of gas in a unit time keeps the constant value, and so the fluid flow can keep the continuity of mass and can keep the same condition as the condition of the natural fluid flow, and in the turbine, the mass of the combustion gas or the steam is able to make a practice of the function of energy originate catalyst, energy function medium and energy propagation medium of BFE of the natural 2nd class permanent motion, because 3DUG and UGP are able to have the same condition as the condition of the natural fluid flow.
(2) It is necessary that the constitution of the turbine must correspond to the mass of the gas, the fixed temperature, the fixed pressure and the fixed rate of expansion of the expanding gas, and the figure and size of the turbine must correspond to the abovementioned (1). And the design of figure and size of the flow of gas and SQF which UFES forms on the every sectional area of the turbine must be calculated.
(3) In order that the abovementioned (1) is completed, it is necessary that the rational selection of a figure and size of turbine and the distribution of inclination angle of blades force the mass of fluid flow and the figure and size of SQF of UFES on the every sectional area which are made and maintained by the expansion of gas, and the mass of fluid flow and the figure and size of SQF of UFES on the every sectional area which are made and maintained by the acceleration motion of mass of fluid flow to be similar at least, desirably to be same, and force two SQF of UFES to coexist and work simultaneously in the turbine.
(4) The one of two SQF which coexist in the turbine makes and maintains the mass of fluid flow and rotates the turbine, the other one of two SQF rotates the turbine additionally.
Claim 5 is the invention 'The machine which uses 3DUG and UGP of SCP filled up the universe' realizes the larger output and higher efficiency turbine.

6. In the case that FQGM is rotating in a reducing part of the flow route, and in the case that FQGM is the axial flow type and has the balance flow curved surface blades, the inclination angle of the blade of FQGM makes SQF of UFES, and this SQF is passing through the every sectional area of FQGM, and is keeping the balance with the pressure of the gas which is compressed by the blades of FQGM in the compressing direction.
In order to use the abovementioned phenomena, it is necessary that the gap between FQGM and the reducing part of the flow route is kept as smaller as possible, and ( the axial flow speed which is based on the combination of the average rotational speed on the each sectional area of FQGM and the tangent value of the inclination angle at the position of the average rotational speed of FQGM )×( the sectional area of FQGM )×( the correction factor of the compression of the fluid ) must keep the fixed constant value.
In the result of the abovementioned, the flow mass which is passing through every sectional area of FQGM become the same, and the condition of the flow mass of claim 6 is the same as the condition of claim 5, and then the flow mass and the figure and size of SQF of UFES which are made and maintained on the every sectional area of FQGM by the rotation of FQGM, the flow mass and the figure and size of SQF of UFES which are made and maintained on the every sectional area of FQGM by the flow mass of the flow route must become to similar at least, desirably become the same, and two SQF coexist and practice simultaneously in FQGM, and two SQF are able to compress the gas by few blades and by few steps and to press out by the higher efficiency.
Claim 6 is the invention 'The machine which uses 3DUG and UGP of SCP filled up the universe' realizes the larger output and the higher efficiency compressor.

7. Claim 7 are the inventions 'The machines which use 3 DUG and UGP of SCP filled up the universe' are the gas turbine and jet engine which are the combination of the turbine of claim5 and the compressor of claim 6.

8. In the case of the machine which is formed by the combination of FQGM and the reducing part and expanding part of the flow route and the ordinary flow route or the large resistance flow route, in order that the machine is able to absorbs and exhausts the gas and dust through itself by high efficiency and silently, it is necessary that FQGM must exist in the expanding part, and must be the axial flow type, and must have the blades formed of the balance flow curved surface, and then ( the axial flow speed of gas which is based on the combination of the average rotational speed on the each sectional area of FQGM and the tangent value of the inclination angle of the blades at the position of the average rotation speed on the each sectional area of FQGM)×( the sectional area of FQGM)x(the correction factor of compression or expansion of the gas) must keep the fixed constant value, in the results of the abovementioned, the condition of claim 8 becomes the same condition as claim 5 in the wide range, and in the case that the flow route passes much dust through itself and becomes the large resistance route, the BFE which arrives in FQGM from the entrance decreases, but the BFE which arrives in FQGM from the exit keeps the fixed constant energy, and so the actual flow mass which is absorbed and exhausted by FQGM keeps the fixed constant mass. In the result, for example, in the case of the vacuum cleaner, the mechanical noise becomes small, and the cleaner keeps the fixed constant cleaning power in spite of the large volume dust.
Claim 8 is the invention 'The machine which uses 3DUG and UGP of SCP filled up the universe' absorbs and exhausts gas, dust and et cetera.

9. Claim 9 is the invention 'The machine which uses 3DUG and UGP of SQF filled up the universe' uses water mixed with the activation agent or the anti freezing agent.
The activation agent is able to subdivide the air bubbles and to exclude the air bubble trouble, and the anti freezing agent is able to prevent the water from freezing.

10. In the case the machine is loaded on the vehicle, in order that the water in the fluid hold and supply means dose not move by the acceleration of the vehicle and the running of the vehicle, and has no trouble, it is necessary that the figure and size of the fluid hold and supply means must be satisfied with the following, the means has the figure and the size which prevent from the injurious movement of water, and the mass of water in the means is minimized, and the damper in the means limits the injurious movement of water.
Claim 10 is the invention 'The machine which uses 3DUG and UGP of SCP filled up the universe' is satisfied with the abovementioned.

11. In the case that the water hold and supply means is set at the front of the generator of the existing water power station and the water which has the head of the water power station is filled in the means, it is possible that the optional number of the machines of this invention and the existing water power generator, individually or together, are able to use 3DUG and UGP of the water.
Claim 11 is the invention 'The machine which uses 3DUG and UGP of SCP filled up the universe' uses the water power of the existing water power station.
In order to use 3DUG and UGP in the case of the long fluid flow route, it is necessary that the fluid hold and supply means are set on the long fluid flow route at regular intervals, and the expanding part, or the combination of the reducing part and expanding part is set at the entrance of the each means, and FQGM based on claim 4 is set in the expanding part, in the result of the abovementioned, the rotation of FQGM makes and maintains FTRP with the mass location setting function and the acceleration, and this FTRP forces 3DUG and UGP to work as the pressure component of BFE of the 2nd class permanent motion of fluid and to transports the fluid by high efficiency.

12. Claim 12 is the invention 'The machine which uses 3DUG and UGP of SCP filled up the universe' transports the fluid by high efficiency.
The blades of FQGM and the wings which have the new and correct wing effect, have the concentric balance flow curved surface or the similar surface on the both faces of them.
In the case that the fluid which is flowing by the 2nd class permanent motion of BFE strikes those blades and wings, or in the case that those blades and wings are moving and strike the fluid which keeps standstill, this fluid is flowing along the both faces of the concentric balance flow curved surface.
In this case, because the balance flow curved surface of the both faces are concentric, the SQF which are along the both faces have the continuous function.
On the blades or on the wings, the upper course SQF penetrates the blades or wings and is connected with the lower course SQF, this continuation and connection of SQF between both courses make the new and correct wing effect and the lifting function is formed.

13. Claim 13 is the invention 'The machine which uses 3DUG and UGP of SCP filled up the universe' has the new and correct wing effect by the concentric balance flow curved surface.
